(19) 

Europäisches
Patentamt
European
Patent Office
Office européen
des brevets

(11) **EP 4 518 001 A1**

(12) **EUROPEAN PATENT APPLICATION**
published in accordance with Art. 153(4) EPC

(43) Date of publication:
**05.03.2025 Bulletin 2025/10**

(21) Application number: 23796521.5

(22) Date of filing: **27.04.2023**

(51) International Patent Classification (IPC):
*H01M 50/451* (2021.01)   *B32B 5/18* (2006.01)
*B32B 27/30* (2006.01)   *H01M 50/42* (2021.01)
*H01M 50/423* (2021.01)   *H01M 50/434* (2021.01)
*H01M 50/443* (2021.01)   *H01M 50/446* (2021.01)
*H01M 50/457* (2021.01)   *H01M 50/489* (2021.01)

(52) Cooperative Patent Classification (CPC):
**B32B 5/18; B32B 27/30; H01M 50/42;**
**H01M 50/423; H01M 50/434; H01M 50/443;**
**H01M 50/446; H01M 50/451; H01M 50/457;**
**H01M 50/489;** Y02E 60/10

(86) International application number:
**PCT/JP2023/016768**

(87) International publication number:
**WO 2023/210786 (02.11.2023 Gazette 2023/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.04.2022 JP 2022075458**

(71) Applicant: **Teijin Limited**
**Osaka 530-0005 (JP)**

(72) Inventors:
- **OKAZAKI, Masato**
 **Osaka-shi, Osaka 530-0005 (JP)**
- **SATO, Megumi**
 **Osaka-shi, Osaka 530-0005 (JP)**
- **NISHIKAWA, Satoshi**
 **Osaka-shi, Osaka 530-0005 (JP)**

(74) Representative: **Berggren Oy**
**P.O. Box 16**
**Eteläinen Rautatiekatu 10A**
**00101 Helsinki (FI)**

(54) **SEPARATOR FOR NONAQUEOUS SECONDARY BATTERIES, AND NONAQUEOUS SECONDARY BATTERY**

(57)   In one embodiment of the present invention, provided is a separator for a non-aqueous secondary battery, the separator including: a heat-resistant porous layer that contains an aromatic type resin and inorganic particles, and an adhesive layer that is provided on the heat-resistant porous layer, and that contains adhesive resin particles having a phenyl group-containing acrylic type resin, in which the adhesive resin particles having a phenyl group-containing acrylic type resin are adhered to the heat-resistant porous layer, and in which an average primary particle diameter of the inorganic particles is from 0.01 μm to less than 0.50 μm.

EP 4 518 001 A1

**Description**

Technical Field

The present disclosure relates to a separator for a non-aqueous secondary battery and a non-aqueous secondary battery.

Background Art

Non-aqueous secondary batteries represented by lithium ion secondary batteries are widely used as power sources for portable electronic devices such as laptop computers, mobile phones, digital cameras, and camcorders. Recently, for a non-aqueous secondary battery represented by a lithium ion secondary battery, an application thereof as a battery for electric power storage or electric vehicles is being reviewed due to the property of a high energy density thereof.

With the spread of non-aqueous secondary batteries, it is increasingly required to ensure safety and stable battery characteristics. Specific measures for ensuring safety and stable battery characteristics include increasing adhesion between the electrode and the separator.

As a separator having increased adhesiveness to an electrode, a separator including an adhesive layer containing a resin having adhesiveness to an electrode is known. For example, the separators disclosed in PTLs 1 and 2 include both a heat-resistant porous layer and an adhesive layer.

> PTL 1: WO2019/130994
> PTL 2: WO2020/246497

SUMMARY OF INVENTION

Technical Problem

By the way, a method for manufacturing a battery using a separator having an adhesive layer exhibiting adhesiveness to an electrode includes a method for heat-pressing a laminated body in which a separator is disposed between a positive electrode and a negative electrode without impregnating the separator with an electrolytic solution (hereinafter, also referred to as "dry heat press"), and a method for heat-pressing a laminated body in which a separator is disposed between a positive electrode and a negative electrode in a state where the laminated body is housed in an exterior material and the separator is impregnated with an electrolytic solution (hereinafter, also referred to as "wet heat press").

When an electrode is favorably bonded to a separator by dry heat press, the electrode and the separator are less likely to be displaced in a process of manufacturing a battery, and a manufacturing yield of the battery can be improved. However, even when the electrode is bonded to the separator by dry heat press, the electrode and the separator may be peeled off from each other when impregnated with an electrolytic solution. When the electrode and the separator are peeled off from each other, short circuit may occur due to external impact, expansion and contraction of the electrode caused by charge and discharge, and the like. Therefore, development of a technique capable of favorably bonding the battery to the separator by any of dry heat press and wet heat press is expected.

Furthermore, the battery is required to have further improved cycle stability so as to withstand repeated use. In order to improve the cycle stability of the battery, it is effective to suppress the thermal shrinkage ratio of the separator to a low level.

If the separator itself is melted and deformed due to thermal shrinkage or the like when the temperature of the battery rises, a current interruption function (so-called shutdown function) is lost, and thermal runaway of the battery occurs, which may cause not only destruction of the battery itself but also destruction of a device incorporating the battery, an accident due to ignition, or the like. As described above, a separator, which is one of members constituting a non-aqueous secondary battery, is required to have heat resistance so as not to be easily broken even when the temperature inside the battery is high in order to ensure safety of the battery.

The present disclosure has been made in view of the above circumstances.

A problem to be solved by an embodiment of the present disclosure is to provide a separator for a non-aqueous secondary battery which has excellent adhesiveness to an electrode by any of dry heat press and wet heat press and has a low thermal shrinkage ratio.

A problem to be solved by another embodiment of the present disclosure is to provide a non-aqueous secondary battery including the separator for a non-aqueous secondary battery.

Solution to Problem

The specific solutions to the problem include the following embodiments:

<1> A separator for a non-aqueous secondary battery, the separator including:

a heat-resistant porous layer that contains an aromatic type resin and inorganic particles, and
an adhesive layer that is provided on the heat-resistant porous layer, and that contains adhesive resin particles having a phenyl group-containing acrylic type resin,
in which the adhesive resin particles having a phenyl group-containing acrylic type resin are adhered to the heat-resistant porous layer, and
in which an average primary particle diameter of the inorganic particles is from 0.01 $\mu$m to less than 0.50 $\mu$m.

<2> The separator for a non-aqueous secondary battery according to <1>, in which the adhesive resin particles having a phenyl group-containing acrylic type resin are at least one selected from the group consisting of: (i) resin particles of a copolymer containing an acrylic type monomer unit and a styrene type monomer unit, and (ii) resin particles of a mixture containing an acrylic type resin and a styrene type resin.
<3> The separator for a non-aqueous secondary battery according to <1> or <2>, in which an adhesion amount of the adhesive resin particles having a phenyl group-containing acrylic type resin to the heat-resistant porous layer is from 0.1 g/m² to 5.0 g/m².
<4> The separator for a non-aqueous secondary battery according to any one of <1> to <3>, in which the adhesive layer has a peak area S1 of a phenyl group of from 0.01 to 3 and a peak area S2 of a carbonyl group of 4 or less, measured by Fourier transform infrared spectroscopy.
<5> The separator for a non-aqueous secondary battery according to any one of <1> to <4>, in which the aromatic type resin contains at least one selected from the group consisting of wholly aromatic polyamide, polyamideimide, and polyimide.
<6> The separator for a non-aqueous secondary battery according to any one of <1> to <5>, in which the inorganic particles contain at least one selected from the group consisting of a metal hydroxide, a metal sulfate, and a metal oxide.
<7> The separator for a non-aqueous secondary battery according to any one of <1> to <6>, in which the separator further contains a porous substrate, and the heat-resistant porous layer is provided on one side or on both sides of the porous substrate.
<8> A non-aqueous secondary battery that obtains electromotive force by lithium doping and dedoping, the non-aqueous secondary battery including: a positive electrode; a negative electrode; and the separator for a non-aqueous secondary battery according to any one of <1> to <7>, the separator being disposed between the positive electrode and the negative electrode.

Advantageous Effects of Invention

According to an embodiment of the present disclosure, there is provided a separator for a non-aqueous secondary battery, the separator having excellent adhesiveness to an electrode by any of dry heat press and wet heat press and has a low thermal shrinkage ratio.
According to another embodiment of the present disclosure, there is provided a non-aqueous secondary battery including the separator for a non-aqueous secondary battery.

DESCRIPTION OF EMBODIMENTS

Hereinafter, embodiments of the present disclosure will be described. Further, the description and the Examples thereof illustrate the embodiments, but do not limit the scope of the embodiments.
In the present disclosure, the numerical range denoted by using "to" represents the range inclusive of the numerical values written before and after "to" as the minimum and maximum values.
Regarding stepwise numerical ranges designated in the present disclosure, an upper or lower limit set forth in a certain numerical range may be replaced by an upper or lower limit of another stepwise numerical range described. Besides, an upper or lower limit set forth in a certain numerical range of the numerical ranges designated in the present disclosure may be replaced by a value indicated in Examples.
In the present disclosure, the term "step" includes not only an independent step, but also the step which is not clearly distinguished from other steps but achieves the desired purpose thereof.
In the present disclosure, when the amount of each component in a composition is referred to and when a plurality of substances corresponding to each component are present in the composition, the total amount of the plurality of substances present in the composition is meant unless otherwise specified.

In the present disclosure, a combination of two or more preferred aspects is a more preferred aspect.

In the present disclosure, the term "solid content" means a component excluding a solvent, and a liquid component other than the solvent, such as a low molecular weight component, is also included in the "solid content" in the present disclosure.

In the present disclosure, the term "solvent" is used to mean to include water, an organic solvent, and a mixed solvent of water and an organic solvent.

In the present disclosure, "MD (machine direction)" refers to the longitudinal direction of a porous substrate and a separator manufactured in a long shape, and "TD (transverse direction)" refers to a direction orthogonal to "MD direction" in a surface direction of the porous substrate and a separator. In the present disclosure, "TD" also refers to a "width direction".

In the present disclosure, "heat-resistant resin" refers to a resin having a melting point of 200°C or higher, or a resin having no melting point and a decomposition temperature of 200°C or higher. That is, the heat-resistant resin in the present disclosure is a resin that is not melted or decomposed in a temperature range of lower than 200°C.

In the present disclosure, the notation "(meth)acryl" means either "acryl" or "methacryl".

In the present disclosure, "monomer unit" of a copolymer or a resin means a constituent unit of the copolymer or the resin, and means a constituent unit obtained by polymerizing a monomer.

In the present disclosure, an "adhesive strength when bonding is performed by dry heat press" is also referred to as a "dry adhesive strength", and an "adhesive strength when bonding is performed by wet heat press" is also referred to as a "wet adhesive strength".

In the present disclosure, "function of bonding by dry heat press" is also referred to as "dry adhesiveness", and "function of bonding by wet heat press" is also referred to as "wet adhesiveness".

[Separator for Non-Aqueous Secondary Battery]

A separator for a non-aqueous secondary battery (hereinafter, also simply referred to as a "separator") of the present disclosure is a separator including: a heat-resistant porous layer containing an aromatic type resin and inorganic particles; and an adhesive layer which is provided on the heat-resistant porous layer and contains adhesive resin particles containing a phenyl group-containing acrylic type resin and in which the adhesive resin particles containing a phenyl group-containing acrylic type resin are adhered to the heat-resistant porous layer, and an average primary particle diameter of the inorganic particles is from 0.01 $\mu$m to less than 0.50 $\mu$m.

Since the separator of the present disclosure has the above-described structure, the separator has excellent adhesiveness to an electrode by any of dry heat press and wet heat press and has a low thermal shrinkage ratio.

A reason why the separator of the present disclosure can exhibit such an effect is not clear, but the present inventors presume the reason as follows. Note that the following presumption is not intended to limit the separator of the present disclosure, and will be described as an example.

In the separator of the present disclosure, the adhesive layer containing adhesive resin particles containing a phenyl group-containing acrylic type resin is provided on the heat-resistant porous layer containing an aromatic type resin and inorganic particles, and the adhesive resin particles containing a phenyl group-containing acrylic type resin are adhered to the heat-resistant porous layer. The acrylic type resin contained in the adhesive resin particles adhering to the heat-resistant porous layer has high affinity with the aromatic ring of the aromatic type resin contained in the heat-resistant porous layer and the electrode in a dry state. In addition, the phenyl group of the acrylic type resin contained in the adhesive resin particles has high affinity with the aromatic ring of the aromatic type resin contained in the heat-resistant porous layer and the electrode in the presence of an electrolytic solution (so-called wet state). As a result, it is presumed that the separator of the present disclosure is excellent in adhesiveness to the electrode by any of dry heat press and wet heat press.

Furthermore, since the particle diameter of the barium sulfate particles is small, the surface area (specific surface area) of the barium sulfate particles per unit volume is increased. Therefore, it is considered that the number of contact points between the barium sulfate particles and the aromatic type resin is increased, so that shrinkage of the heat-resistant porous layer when exposed to a high temperature is suppressed. In addition, it is presumed that a large number of barium sulfate particles having small particle diameters are connected to each other, and therefore the heat-resistant porous layer is hardly broken when the separator is exposed to a high temperature. On the other hand, when the particle diameter of the barium sulfate particles is large to some extent, aggregation of the barium sulfate particles due to an excessively small particle diameter is suppressed, and the barium sulfate particles are more likely to be uniformly dispersed in the heat-resistant porous layer. As a result, it is considered that the thermal shrinkage ratio of the separator is suppressed to be low.

[Heat-Resistant Porous Layer]

The heat-resistant porous layer in the present disclosure contains an aromatic type resin and inorganic particles.

The heat-resistant porous layer is a coating film having a large number of micropores and allowing gas or liquid to pass therethrough from one side to the other side.

In the present disclosure, the "aromatic type resin" means a resin having an aromatic ring in a main chain or a side chain. Examples of the aromatic ring include a benzene ring, a naphthalene ring, and an anthracene ring, and among these, a benzene ring is preferable.

The aromatic type resin preferably contains at least one selected from the group consisting of wholly aromatic polyamide, polyamideimide, and polyimide from the viewpoint of excellent heat resistance, and is more preferably at least one selected from the group consisting of wholly aromatic polyamide, polyamideimide, and polyimide.

Among the aromatic type resins, the wholly aromatic polyamides are suitable for the heat-resistant porous layer from the viewpoint of durability. The wholly aromatic polyamide means a polyamide having a main chain composed only of a benzene ring and an amide bond. However, the wholly aromatic polyamide may be copolymerized with a small amount of an aliphatic monomer. The wholly aromatic polyamide is also called "aramid".

The wholly aromatic polyamide may be meta-type or para-type.

Examples of the meta-type wholly aromatic polyamide include polymetaphenylene isophthalamide. Examples of the para-type wholly aromatic polyamide include copolyparaphenylene 3,4'-oxydiphenylene terephthalamide, and polyparaphenylene terephthalamide.

Among the wholly aromatic polyamides, the meta-type wholly aromatic polyamide is preferable from the viewpoint of easily forming a heat-resistant porous layer and excellent oxidation reduction resistance in the electrode reaction.

Specifically, the wholly aromatic polyamide is preferably polymetaphenylene isophthalamide or copolyparaphenylene 3,4'-oxydiphenylene terephthalamide, and more preferably polymetaphenylene isophthalamide.

A polyamideimide and a polyimide are suitable for the heat-resistant porous layer from the viewpoint of heat resistance among the aromatic type resins.

A weight-average molecular weight (Mw) of the aromatic type resin contained in the heat-resistant porous layer is preferably $1 \times 10^3$ to $1 \times 10^7$, more preferably $5 \times 10^3$ to $5 \times 10^6$, and still more preferably $1 \times 10^4$ to $1 \times 10^6$.

The weight-average molecular weight (Mw) of the aromatic type resin contained in the heat-resistant porous layer is a value measured by a gel permeation chromatography (GPC) method. Specifically, the weight-average molecular weight (Mw) is measured by the following method. A polymer is dissolved so as to have a concentration of 1% by mass in a solution in which lithium chloride is dissolved in dimethylformamide (DMF) so as to have a concentration of 0.01 mol/L (liter; The same applies hereinafter.) to prepare a sample solution. GPC measurement is performed using the prepared sample solution as a measurement sample, and a molecular weight distribution is calculated. The measurement was performed at a detection wavelength of 280 nm using a chromatographic data processing device "Shimadzu Chromatopak C-R4A" manufactured by Shimadzu Corporation and a GPC column "GPC KD-802" manufactured by Resonac Corporation. As a reference, a polystyrene molecular weight standard substance was used. Note that, in a case where a sample containing a porous substrate is measured, a sample obtained by adding DMF in which lithium chloride was dissolved so as to have a concentration of 0.01 mol/L and heating and dissolving only an aromatic type resin at 80°C was used as a measurement sample.

As the aromatic type resin, a commercially available product on the market may be used.

Examples of a commercially available product of the wholly aromatic polyamide include Teijinconex (registered trademark, meta-type); Technora (registered trademark, para-type), and Twaron (registered trademark, para-type) all manufactured by TEIJIN LIMITED. Examples of a commercially available product of a polyamideimide include Torlon (registered trademark) 4000TF manufactured by Solvay. Examples of a commercially available product of a polyimide include Q-VR-X1444 manufactured by PI R&D Co., Ltd.

The heat-resistant porous layer may contain only one kind or two or more kinds of aromatic type resins.

A volume ratio of the aromatic type resin in the heat-resistant porous layer is preferably 15% by volume to 85% by volume, more preferably 20% by volume to 80% by volume, and still more preferably 25% by volume to 75% by volume, with respect to the total volume of the heat-resistant porous layer.

The volume ratio Vb (% by volume) of the aromatic type resin in the heat-resistant porous layer is determined by the following formula.

$$Vb = \{(Xb/Db)/(Xa/Da + Xb/Db + Xc/Dc + ... + Xn/Dn)\} \times 100$$

Here, among the constituent materials of the heat-resistant porous layer, the aromatic type resin is b, the other constituent materials are a, c,..., and n, the mass of each constituent material contained in the heat-resistant porous layer having a predetermined area is Xa, Xb, Xc,..., and Xn (g), and the true density of each constituent material is Da, Db, Dc,..., and Dn (g/cm$^3$).

Xa and the like substituted into the above formula are the mass (g) of the constituent material used for forming the heat-resistant porous layer having a predetermined area, or the mass (g) of the constituent material taken out from the heat-resistant porous layer having a predetermined area.

Da and the like substituted into the above formula are the true density (g/cm$^3$) of the constituent material used for forming the heat-resistant porous layer or the true density (g/cm$^3$) of the constituent material taken out from the heat-resistant porous layer.

The volume ratio of the aromatic type resin in the heat-resistant porous layer is preferably 50% by volume or more, more preferably 70% by volume or more, and still more preferably 90% by volume or more with respect to the total volume of all the resins contained in the heat-resistant porous layer. The volume ratio may be 50% by volume to 100% by volume.

The heat-resistant porous layer may contain a heat-resistant resin other than the aromatic type resin.

Examples of the heat-resistant resin other than the aromatic type resin include a polysulfone, a polyether sulfone, a polyketone, a polyether ketone, a polyetherimide, a cellulose, and a polyvinylidene fluoride type resin.

When the heat-resistant porous layer contains a heat-resistant resin other than the aromatic type resin, the heat-resistant porous layer may contain only one kind or two or more kinds of heat-resistant resins other than the aromatic type resin.

A volume ratio of the heat-resistant resin other than the aromatic type resin in the heat-resistant porous layer is preferably 0% by volume to 50% by volume, more preferably 0% by volume to 30% by volume, and still more preferably 1% by volume to 10% by volume with respect to the total volume of all the resins contained in the heat-resistant porous layer in order to maintain an effect of the aromatic type resin.

The heat-resistant porous layer contains inorganic particles from the viewpoint of heat resistance. The average primary particle diameter of the inorganic particles is in a range of from 0.01 μm to less than 0.50 μm.

The inorganic particles are contained in the heat-resistant porous layer, for example, in a state of being bound to each other and covered by the aromatic type resin.

The inorganic particles preferably contain at least one selected from the group consisting of a metal hydroxide, a metal oxide, a metal nitride, a metal carbonate, and a metal sulfate.

Examples of the metal hydroxide include aluminum hydroxide, magnesium hydroxide, calcium hydroxide, chromium hydroxide, zirconium hydroxide, cerium hydroxide, nickel hydroxide, and boron hydroxide, and magnesium hydroxide is preferable. Examples of the metal oxide include silica, alumina, zirconia, and magnesium oxide. Examples of the metal nitride include boron nitride and aluminum nitride. Examples of the metal carbonate include calcium carbonate and magnesium carbonate. Examples of the metal sulfate include barium sulfate and calcium sulfate, and barium sulfate is preferable.

The inorganic particles more preferably contain at least one selected from the group consisting of a metal hydroxide, a metal sulfate, and a metal oxide from the viewpoint of improving heat resistance, reducing film resistance, and reducing a coefficient of friction. The heat-resistant porous layer may contain two or more kinds of inorganic particles made of different materials.

The inorganic particles may be surface-modified with a silane coupling agent or the like.

The particle shape of each of the inorganic particles is not limited, and may be a spherical shape, an elliptical shape, a plate shape, a needle shape, or an amorphous shape. The inorganic particles contained in the heat-resistant porous layer are preferably plate-shaped particles from the viewpoint of suppressing short circuit of a battery. The inorganic particles contained in the heat-resistant porous layer may be aggregated particles or primary particles which are not aggregated, and are preferably primary particles which are not aggregated from the viewpoint of suppressing a short circuit of a battery.

The average primary particle diameter of the inorganic particles is from 0.01 μm to less than 0.50 μm. When the average primary particle diameter of the inorganic particles is 0.01 μm or more, aggregation of the inorganic particles is suppressed, and a heat-resistant porous layer having higher uniformity can be formed. From such a viewpoint, the average primary particle diameter of the inorganic particles is preferably 0.02 μm or more, more preferably 0.03 μm or more, and still more preferably 0.05 μm or more. On the other hand, when the average primary particle diameter of the inorganic particles is less than 0.50 μm, shrinkage of the heat-resistant porous layer when the heat-resistant porous layer is exposed to a high temperature is further suppressed, furthermore, smoothness of a surface of the heat-resistant porous layer on the adhesive layer side is improved, and as a result, an adhesive strength is also improved. From such a viewpoint, the volume average particle diameter of the inorganic particles is preferably 0.45 μm or less, more preferably 0.40 μm or less, and still more preferably 0.30 μm or less.

The heat-resistant porous layer may contain two or more kinds of inorganic particles having different average primary particle diameters. The two or more kinds of inorganic particles having different average primary particle diameters may be made of the same material or different materials. When the heat-resistant porous layer contains two or more kinds of inorganic particles having different average primary particle diameters, preferably, the average primary particle diameter of each of the two or more kinds of inorganic particles is within the above range, and preferably, the average primary particle diameter of each of the two or more kinds of inorganic particles is within the above range and the average primary particle diameter of the whole (that is, mixed particles of inorganic particles having different average primary particle diameters) is within the above range.

The average primary particle diameter of the inorganic particles is a value measured by the following method.

The average primary particle diameter of the inorganic particles contained in the heat-resistant porous layer is determined by measuring the major diameters of 100 inorganic particles randomly selected by observation with a scanning electron microscope (SEM), and averaging the major diameters of 100 inorganic particles. The sample subjected to the SEM observation is inorganic particles which are materials for forming the heat-resistant porous layer, or inorganic particles which are taken out from the heat-resistant porous layer of the separator. The method for taking out the inorganic particles from the heat-resistant porous layer of the separator is not limited. Examples of the method include a method in which the heat-resistant porous layer peeled off from the separator is immersed in an organic solvent in which the resin is dissolved to dissolve the resin in the organic solvent to take out the inorganic particles; and a method in which the heat-resistant porous layer peeled from the separator is heated to about 800°C to eliminate the resin and take out the inorganic particles.

A volume ratio of the inorganic particles in the heat-resistant porous layer is not particularly limited, but is, for example, preferably 15% by volume to 85% by volume, more preferably 20% by volume to 80% by volume, and still more preferably 25% by volume to 75% by volume, with respect to the total volume of the heat-resistant porous layer. When the volume ratio of the inorganic particles in the heat-resistant porous layer is 15% by volume or more with respect to the total volume of the heat-resistant porous layer, heat resistance of the separator can be suitably enhanced. On the other hand, when the volume ratio of the inorganic particles in the heat-resistant porous layer is 85% by volume or less with respect to the total volume of the heat-resistant porous layer, the heat-resistant porous layer is more hardly peeled off from a porous substrate.

The volume ratio Vb (% by volume) of the inorganic particles in the heat-resistant porous layer is determined by the following formula.

$$Vb = \{(Xb/Db)/(Xa/Da + Xb/Db + Xc/Dc + ... + Xn/Dn)\} \times 100$$

Here, among the constituent materials of the heat-resistant porous layer, the inorganic particles are b, the other constituent materials are a, c,..., and n, the mass of each constituent material contained in the heat-resistant porous layer having a predetermined area is Xa, Xb, Xc,..., and Xn (g), and the true density of each constituent material is Da, Db, Dc,..., and Dn (g/cm$^3$).

Xa and the like substituted into the above formula are the mass (g) of the constituent material used for forming the heat-resistant porous layer having a predetermined area, or the mass (g) of the constituent material taken out from the heat-resistant porous layer having a predetermined area.

Da and the like substituted into the above formula are the true density (g/cm$^3$) of the constituent material used for forming the heat-resistant porous layer or the true density (g/cm$^3$) of the constituent material taken out from the heat-resistant porous layer.

The heat-resistant porous layer may contain a component (so-called another component) other than the aromatic type resin and the inorganic particles described above, if necessary. Examples of the other component include various additives. Examples of the additive include a dispersant such as a surfactant, a wetting agent, an antifoaming agent, and a pH adjuster. The dispersant is added to a coating liquid for forming the heat-resistant porous layer for the purpose of improving dispersibility, coatability, or storage stability. The wetting agent, the antifoaming agent, and the pH adjuster are added to the coating liquid for the purpose of improving compatibility with a porous substrate, for the purpose of suppressing mixing of air into the coating liquid, and for the purpose of adjusting a pH, respectively.

[Characteristics of Heat-Resistant Porous Layer]

<<Thickness>>

The thickness of the heat-resistant porous layer is preferably 0.5 μm or more per surface, and more preferably 1.0 μm or more per surface from the viewpoint of heat resistance or handleability of the separator. On the other hand, the thickness of the heat-resistant porous layer is preferably 5.0 μm or less per surface, and more preferably 4.0 μm or less per surface from the viewpoint of handleability of the separator or an energy density of a battery.

When the heat-resistant porous layers are provided on both sides of a porous substrate, the total thickness of the heat-resistant porous layers on both sides is preferably 1.0 μm or more, more preferably 2.0 μm or more, and still more

preferably 3.0 μm or more. On the other hand, the total thickness of the heat-resistant porous layers on both sides is preferably 10.0 μm or less, more preferably 8.0 μm or less, and still more preferably 7.0 μm or less.

The thickness (μm) of the heat-resistant porous layer is a value measured with a contact type thickness meter (LITEMATIC VL-50, manufactured by Mitutoyo Corporation). As a measuring terminal, a cylindrical terminal having a diameter of 5 mm is used, and adjustment is performed such that a load of 0.01 N is applied during the measurement. The thicknesses of arbitrary 20 points within an area of 10 cm × 10 cm are measured, and an average value thereof is determined.

When the heat-resistant porous layers are provided on both sides of a porous substrate, a difference between the thickness of the heat-resistant porous layer on one side and the thickness of the heat-resistant porous layer on the other side is preferably small, and is, for example, preferably 20% or less of the total thickness thereof on both sides.

<<Mass per Unit Area>>

A mass per unit area of the entire heat-resistant porous layers on both sides is preferably 1.0 g/m$^2$ to 10.0 g/m$^2$. The mass per unit area of the entire heat-resistant porous layers on both sides is preferably 1.0 g/m$^2$ or more, more preferably 2.0 g/m$^2$ or more, and still more preferably 3.0 g/m$^2$ or more from the viewpoint of heat resistance or handleability of the separator. On the other hand, the mass per unit area of the heat-resistant porous layers is preferably 10.0 g/m$^2$ or less, more preferably 8.0 g/m$^2$ or less, and still more preferably 7.0 g/m$^2$ or less from the viewpoint of handleability of the separator or an energy density of a battery.

When the heat-resistant porous layers are provided on both sides of the porous substrate, a difference between the mass per unit area of the heat-resistant porous layer on one side and the mass per unit area of the heat-resistant porous layer on the other side is preferably 20% by mass or less with respect to the mass per unit area of the entire heat-resistant porous layers on both sides from the viewpoint of suppressing curling of the separator.

The mass (g/m$^2$) per unit area of the heat-resistant porous layer is determined by subtracting a basis weight (g/m$^2$) before formation of the layer from a basis weight (g/m$^2$) after formation of the layer.

<<Porosity>>

The porosity of the heat-resistant porous layer is preferably from 30% to 80%. The porosity of the heat-resistant porous layer is preferably 30% or more, more preferably 35% or more, and still more preferably 40% or more from the viewpoint of ion permeability of the separator. On the other hand, the porosity of the heat-resistant porous layer is preferably 80% or less, more preferably 70% or less, and still more preferably 60% or less from the viewpoint of mechanical strength of the heat-resistant porous layer.

The porosity ε (%) of the heat-resistant porous layer is determined by the following formula.

$$\varepsilon = \{1 - (Wa/da + Wb/db + Wc/dc + ... + Wn/dn)/t\} \times 100$$

Here, the constituent materials of the heat-resistant porous layer are a, b, c,..., and n, the mass of each constituent material is Wa, Wb, Wc,..., and Wn (g/cm$^2$), the true density of each constituent material is da, db, dc,..., and dn (g/cm$^3$), and the thickness of the heat-resistant porous layer is t (μm).

[Adhesive Layer]

The adhesive layer in the present disclosure is a layer provided on a surface of the heat-resistant porous layer, and exists as an outermost layer of the separator. The adhesive layer in the present disclosure is a layer which contains adhesive resin particles containing a phenyl group-containing acrylic type resin (that is, specific adhesive resin particles) and in which the specific adhesive resin particles are adhered to the heat-resistant porous layer.

In the separator of the present disclosure, the adhesive layer may have a structure in which a large number of specific adhesive resin particles are arranged adjacent to each other on a surface of the heat-resistant porous layer to form a layer, or may have a structure in which a large number of specific adhesive resin particles are scattered on the surface of the heat-resistant porous layer. When the adhesive layer has a structure in which a plurality of specific adhesive resin particles are arranged adjacent to each other on the surface of the heat-resistant porous layer to form a layer, the adhesive layer may have a single-layer structure in which the specific adhesive resin particles do not overlap each other in a thickness direction, or may have a multilayer structure having two or more layers, in which a plurality of specific adhesive resin particles overlap each other in the thickness direction. The adhesive layer in the present disclosure preferably has a structure in which a large number of specific adhesive resin particles are arranged adjacent to each other on the surface of the heat-resistant porous layer from the viewpoint of better adhesiveness to an electrode, and preferably has a single-layer structure in which the specific adhesive resin particles do not overlap each other in the thickness direction from the viewpoint of increasing an energy density of a battery and ensuring ion permeability.

The adhesive layer in the present disclosure allows gas or liquid to pass therethrough from one side to the other side by a gap existing between the specific adhesive resin particles.

The structure in which the specific adhesive resin particles are adhered to the heat-resistant porous layer includes, in addition to an aspect in which a resin maintains a particle shape in a completed separator, an aspect in which some of resin particles are melted by a heat treatment or a drying treatment and do not maintain a particle shape in a separator completed by using resin particles as a material of the adhesive layer.

Since the adhesive layer in the present disclosure has a structure in which the specific adhesive resin particles are adhered to the heat-resistant porous layer, interfacial destruction between the heat-resistant porous layer and the adhesive layer hardly occurs. In addition, when the adhesive layer in the present disclosure has a structure in which the specific adhesive resin particles are adhered and are connected to each other, the adhesive layer has excellent toughness, and cohesive failure of the adhesive layer hardly occurs.

In the separator of the present disclosure, the adhesive layer is a layer containing adhesive resin particles (specific adhesive resin particles) containing a phenyl group-containing acrylic type resin, and the specific adhesive resin particles are adhered to the heat-resistant porous layer containing an aromatic type resin. Therefore, in an environment in which an electrolytic solution is present, the specific adhesive resin particles can continue to adhere to the heat-resistant porous layer due to an interaction caused by a high affinity between a phenyl group derived from the phenyl group-containing acrylic type resin contained in the adhesive layer and an aromatic ring derived from the aromatic type resin contained in the heat-resistant porous layer. As a result, not only the dry adhesiveness to the electrode but also the wet adhesiveness to the electrode is excellent.

The specific adhesive resin particles are made of a particulate resin containing a phenyl group-containing acrylic type resin and having adhesiveness to an electrode of a battery. The specific adhesive resin particles are preferably resin particles that are stable to an electrolytic solution and are also electrochemically stable.

The adhesive resin particles containing a phenyl group-containing acrylic type resin (specific adhesive resin particles) are preferably at least one selected from the group consisting of (i) resin particles made of a copolymer containing an acrylic type monomer unit and a styrene type monomer unit, and (ii) resin particles made of a mixture containing an acrylic type resin and a styrene type resin.

Hereinafter, (i) resin particles made of a copolymer containing an acrylic type monomer unit and a styrene type monomer unit are also referred to as "resin particles A", and (ii) resin particles made of a mixture containing an acrylic type resin and a styrene type resin are also referred to as "resin particles B".

The resin particles A are particles made of a copolymer containing an acrylic type monomer unit and a styrene type monomer unit. The acrylic type monomer unit can contribute to dry adhesiveness, and the styrene type monomer unit can contribute to wet adhesiveness. The copolymer may contain a monomer unit other than the acrylic type monomer unit and the styrene type monomer unit as a monomer unit.

The acrylic type monomer is preferably at least one acrylic type monomer selected from the group consisting of (meth)acrylic acid, (meth)acrylic acid salt, and (meth)acrylic acid ester.

Examples of the (meth)acrylic acid salt include sodium (meth)acrylate, potassium (meth)acrylate, magnesium (meth)acrylate, and zinc (meth)acrylate. Examples of the (meth)acrylic acid ester include methyl (meth)acrylate, ethyl (meth)acrylate, isopropyl (meth)acrylate, n-butyl (meth)acrylate, isobutyl (meth)methacrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, 2-hydroxypropyl (meth)acrylate, 4-hydroxybutyl (meth)acrylate, 2-(diethylamino)ethyl (meth)acrylate, and methoxypolyethylene glycol (meth)acrylate.

The copolymer may contain, as a monomer unit, only one kind of acrylic type monomer unit or two or more kinds thereof.

The styrene type monomer is a monomer having a phenyl group.

Examples of the styrene type monomer include styrene, m-chlorostyrene, p-chlorostyrene, p-fluorostyrene, p-methoxystyrene, m-tert-butoxystyrene, p-tert-butoxystyrene, p-vinylbenzoic acid, p-methyl-$\alpha$-methylstyrene, and styrenesulfonic acid and salts thereof (for example, sodium styrenate). Among them, styrene is preferable as the styrene type monomer.

The copolymer may contain, as a monomer unit, only one kind of styrene type monomer unit or two or more kinds thereof.

The content of the styrene type monomer unit contained in the copolymer is preferably 10% by mass to 99% by mass, more preferably 15% by mass to 95% by mass, and still more preferably 20% by mass to 90% by mass with respect to the total content of the styrene type monomer unit and the acrylic type monomer unit from the viewpoint of achieving both dry adhesiveness and wet adhesiveness.

The copolymer preferably contains an acid group-containing monomer unit as a monomer unit from the viewpoint of dispersion stability during preparation of the copolymer.

Examples of the acid group-containing monomer include: a monomer having a carboxy group, such as (meth) acrylic acid, crotonic acid, maleic acid, fumaric acid, or itaconic acid; a monomer having a sulfonic acid group, such as vinylsulfonic acid, methylvinylsulfonic acid, (meth)allylsulfonic acid, (meth)acrylic acid-2-ethyl sulfonate, 2-acrylamide-2-methylpropanesulfonic acid, or 3-allyloxy-2-hydroxypropanesulfonic acid; a monomer having a phosphoric acid group, such as 2-(meth)acryloyloxyethyl phosphate, methyl-2-(meth)acryloyloxyethyl phosphate, or ethyl-(meth)acryloyloxyethyl phosphate; and a monomer having a hydroxy group, such as 2-hydroxyethyl (meth)acrylate, 2-hydroxypropyl (meth)acrylate, or 4-hydroxybutyl (meth)acrylate. Among these monomers, the acid group-containing monomer is preferably a monomer having a carboxy group.

The copolymer may contain only one kind or two or more kinds of acid group-containing monomer units as monomer units.

The content of the acid group-containing monomer unit contained in the copolymer is preferably 0.1% by mass to 20% by mass, more preferably 1% by mass to 10% by mass, and still more preferably 3% by mass to 7% by mass with respect to all the constituent units.

The copolymer preferably contains a crosslinkable monomer unit as a monomer unit from the viewpoint of adjusting the degree of swelling in an electrolytic solution. The crosslinkable monomer unit is a monomer capable of forming a crosslinked structure during or after polymerization by heating or irradiation with an energy ray.

Examples of the crosslinkable monomer include a monomer having two or more polymerizable reactive groups (so-called a polyfunctional monomer). Examples of such a polyfunctional monomer include: a divinyl compound such as divinylbenzene; a di(meth)acrylic acid ester compound such as diethylene glycol dimethacrylate, ethylene glycol dimethacrylate, diethylene glycol diacrylate, or 1,3-butylene glycol diacrylate; a tri(meth)acrylic acid ester compound such as trimethylolpropane trimethacrylate or trimethylolpropane triacrylate; and an ethylenically unsaturated monomer containing an epoxy group, such as allyl glycidyl ether or glycidyl methacrylate. Among these monomers, the crosslinkable monomer is preferably at least one selected from the group consisting of a dimethacrylic acid ester compound and an ethylenically unsaturated monomer containing an epoxy group, and more preferably at least one selected from dimethacrylic acid ester compounds from the viewpoint of easily controlling the degree of swelling.

The copolymer may contain only one kind or two or more kinds of crosslinkable monomer units as monomer units.

When a ratio of the crosslinkable monomer unit in the copolymer increases, the degree of swelling of the copolymer in an electrolytic solution tends to decrease. Therefore, the ratio of the crosslinkable monomer unit in the copolymer is preferably determined in consideration of the kind and amount of a monomer to be used.

The content of the crosslinkable monomer unit contained in the copolymer is preferably 0.1% by mass to 5% by mass, more preferably 0.2% by mass to 4% by mass, and still more preferably 0.5% by mass to 3% by mass with respect to all the constituent units.

The resin particles B are particles made of a mixture containing an acrylic type resin and a styrene type resin. The acrylic type resin can contribute to dry adhesiveness, and the styrene type resin can contribute to wet adhesiveness. The mixture may contain a resin other than the acrylic type resin and the styrene type resin.

The resin particles B may be, for example, particles in which a part or the whole of a surface of the acrylic type resin particle is coated with the styrene type resin, particles in which a part or the whole of a surface of the styrene type resin particle is coated with the acrylic type resin, or particles in which the acrylic type resin and the styrene type resin are mixed in the whole of one particle. The resin particles B are preferably particles in which a part or the whole of a surface of the acrylic type resin particle is coated with the styrene type resin from the viewpoint of blocking resistance.

In the present disclosure, the "acrylic type resin" means a resin containing an acrylic type monomer unit, and includes both a polymer obtained by polymerizing only an acrylic type monomer and a copolymer obtained by polymerizing an acrylic type monomer and another monomer.

Examples of the acrylic type resin include poly(meth)acrylic acid, poly(meth)acrylic acid salt, poly(meth)acrylic acid ester, crosslinked poly(meth)acrylic acid, crosslinked poly(meth)acrylic acid salt, and crosslinked poly(meth)acrylic acid ester. The acrylic type resin may be a modified acrylic type resin. The mixture may contain only one kind or two or more kinds of acrylic type resins.

The acrylic type resin preferably contains a constituent unit (acrylic type monomer unit) derived from at least one acrylic type monomer selected from the group consisting of (meth)acrylic acid, (meth)acrylic acid salt, and (meth)acrylic acid ester. Specific examples of the (meth)acrylic acid salt and the (meth)acrylic acid ester are as described above.

The content of the acrylic type monomer unit contained in the acrylic type resin is preferably 50% by mass to 100% by mass with respect to the total monomer units.

In the present disclosure, the "styrene type resin" means a resin containing a styrene type monomer unit, and includes both a polymer obtained by polymerizing only a styrene type monomer and a copolymer obtained by polymerizing a styrene type monomer and another monomer.

Specific examples of the styrene type monomer are as described above.

The content of the styrene type monomer unit contained in the styrene type resin is preferably 50% by mass to 100% by mass with respect to the total monomer units.

The content of the styrene type resin contained in the mixture is preferably 10% by mass to 99% by mass, more preferably 20% by mass to 95% by mass, and still more preferably 30% by mass to 90% by mass with respect to the total content of the styrene type resin and the acrylic type resin from the viewpoint of achieving both dry adhesiveness and wet adhesiveness.

The acrylic type resin and/or the styrene type resin contained in the mixture preferably contains an acid group-containing monomer unit and/or a crosslinkable monomer unit. The acid group-containing monomer unit and the crosslinkable monomer unit are as described above.

A glass transition temperature of the specific adhesive resin particles is preferably 10°C to 150°C. When the glass transition temperature of the specific adhesive resin particles is 10°C to 150°C, adhesiveness (dry adhesiveness and wet adhesiveness) of the adhesive layer to an electrode can be improved while blocking of the adhesive layer is suppressed. The glass transition temperature of the specific adhesive resin particles is more preferably 20°C or higher, and still more preferably 30°C or higher. From the same viewpoint, the glass transition temperature is more preferably 130°C or lower, and still more preferably 110°C or lower.

The glass transition temperature of the specific adhesive resin particles can be controlled by adjusting a copolymerization ratio of the acrylic type monomer, the styrene type monomer, and the like in the copolymer or the resin using a FOX formula as a guideline.

The glass transition temperature of the specific adhesive resin particles is determined from a differential scanning calorimetry curve (DSC curve) obtained by differential scanning calorimetry (DSC). A differential scanning calorimeter [Q20 Differential Scanning Calorimeter, manufactured by TA Instruments] is used as a measuring apparatus, and 10 mg of the resin particles are used as a sample. A temperature at a point where a straight line obtained by extending a baseline on a low temperature side to a high temperature side intersects with a tangent line which is a tangent line of a curve of a stepwise change portion and has a maximum gradient is defined as the glass transition temperature of the resin particles.

A volume average particle diameter of the specific adhesive resin particles is preferably 0.01 $\mu$m or more, more preferably 0.05 $\mu$m or more, still more preferably 0.1 $\mu$m or more, and particularly preferably 0.2 $\mu$m or more, from the viewpoint of forming a favorable porous structure. On the other hand, the volume average particle diameter of the specific adhesive resin particles is preferably 1.2 $\mu$m or less, more preferably 1.0 $\mu$m or less, still more preferably 0.8 $\mu$m or less, and particularly preferably 0.7 $\mu$m or less, from the viewpoint of suppressing the thickness of the adhesive layer.

The volume average particle diameter of the specific adhesive resin particles is determined by the following method.

The specific adhesive resin particles are dispersed in water containing a nonionic surfactant, and a particle size distribution is measured using a laser diffraction particle size distribution measuring apparatus. In a volume-based particle size distribution, a particle diameter (D50) at a cumulative volume of 50% from a smaller diameter side is taken as the volume average particle diameter ($\mu$m) of the specific adhesive resin particles.

As the nonionic surfactant, for example, Triton (registered trademark) X-100 [compound name: polyethylene glycol tert-octylphenyl ether, manufactured by The Dow Chemical Company] can be suitably used. As the laser diffraction particle size distribution measuring apparatus, for example, Mastersizer 2000 manufactured by SYSMEX CORPORATION can be suitably used.

An adhesion amount of the specific adhesive resin particles to the heat-resistant porous layer is preferably 0.1 g/m$^2$ to 5.0 g/m$^2$. When the adhesion amount of the specific adhesive resin particles to the heat-resistant porous layer is 0.1 g/m$^2$ or more, a wet adhesive strength between the adhesive layer and the heat-resistant porous layer and a wet adhesive strength between the adhesive layer and an electrode can be further improved. From such a viewpoint, the adhesion amount of the specific adhesive resin particles to the heat-resistant porous layer is preferably 0.1 g/m$^2$ or more, more preferably 0.2 g/m$^2$ or more, still more preferably 0.3 g/m$^2$ or more, and particularly preferably 0.4 g/m$^2$ or more. On the other hand, when the adhesion amount of the specific adhesive resin particles to the heat-resistant porous layer is 5.0 g/m$^2$ or less, swelling of the specific adhesive resin particles in an electrolytic solution is suppressed, and wet adhesiveness between the adhesive layer and the heat-resistant porous layer and wet adhesiveness between the adhesive layer and an electrode can be more favorably maintained. From such a viewpoint, the adhesion amount of the specific adhesive resin particles to the heat-resistant porous layer is preferably 5.0 g/m$^2$ or less, more preferably 4.0 g/m$^2$ or less, still more preferably 3.0 g/m$^2$ or less, and particularly preferably 1.0 g/m$^2$ or less. When the heat-resistant porous layers are provided on both sides of the porous substrate, the total adhesion amount of the specific adhesive resin particles to the heat-resistant porous layers on both sides may be within the above range.

An adhesion amount (g/m$^2$) of the adhesive resin particles contained in the adhesive layer to the heat-resistant porous layer is determined by subtracting a basis weight (g/m$^2$) before formation of the layer from a basis weight (g/m$^2$) after formation of the layer.

The degree of swelling of the specific adhesive resin particles in an electrolytic solution is preferably 450% or less, more preferably 430% or less, and still more preferably 410% or less from the viewpoint of sufficiently ensuring ion permeability in the adhesive layer. A lower limit of the degree of swelling of the specific adhesive resin particles in an electrolytic solution may be, for example, 110% or more.

The degree of swelling of the specific adhesive resin particles in an electrolytic solution is determined by the following method.

An aqueous dispersion of the specific adhesive resin particles is poured onto a glass plate with a metal frame having an inner size of 50 mm × 70 mm, and dried at 150°C for one hour to prepare a sheet-shaped measurement sample. The prepared measurement sample is cut out for about 1 g, and the weight W1 (g) thereof is accurately measured with an electronic balance. Thereafter, the measurement sample is immersed in an electrolytic

solution [1 mol/L $LiBF_4$ ethylene carbonate : ethyl methyl carbonate (volume ratio 3 : 7)] at 60°C for 24 hours. The measurement sample after immersion is taken out from the electrolytic solution, and the electrolytic solution adhering to a surface is wiped off. Thereafter, the weight W2 (g) thereof is measured with an electronic balance, and the degree of swelling (%) of the resin particles is determined by the following formula.

$$\text{Degree of swelling (\%)} = (W2/W1) \times 100$$

The adhesive layer may contain resin particles other than the specific adhesive resin particles.

Examples of the resin particles other than the specific adhesive resin particles include particles of a polyvinylidene fluoride type resin, particles of a fluorine type rubber, particles of a homopolymer or a copolymer of a vinyl nitrile compound (acrylonitrile, methacrylonitrile, or the like), particles of carboxymethyl cellulose, particles of a hydroxyalkyl cellulose, particles of a polyvinyl alcohol, particles of a polyvinyl butyral, particles of a polyvinyl pyrrolidone, particles of a polyether (polyethylene oxide, polypropylene oxide, or the like), and particles containing a mixture of two or more kinds thereof. Among these particles, the resin particles other than the specific adhesive resin particles are preferably particles of a polyvinylidene fluoride type resin. When the adhesive layer contains particles of a polyvinylidene fluoride type resin in addition to the specific adhesive resin particles, an adhesive strength (wet adhesive strength) between the adhesive layer and the heat-resistant porous layer can be improved. **In** addition, when the adhesive layer contains particles of a polyvinylidene fluoride type resin in addition to the specific adhesive resin particles, swelling of the adhesive layer in an electrolytic solution can be suppressed. As a result, adhesiveness (wet adhesiveness) between the separator and an electrode is improved, and the adhesiveness is favorably maintained.

Examples of the polyvinylidene fluoride type resin include a homopolymer of vinylidene fluoride (that is, polyvinylidene fluoride); a copolymer of vinylidene fluoride and another monomer (polyvinylidene fluoride copolymer); and a mixture of polyvinylidene fluoride and a polyvinylidene fluoride copolymer. Examples of a monomer copolymerizable with vinylidene fluoride include tetrafluoroethylene, hexafluoropropylene, trifluoroethylene, chlorotrifluoroethylene, trichloroethylene, vinyl fluoride, trifluoroperfluoropropyl ether, ethylene, vinyl acetate, vinyl chloride, and acrylonitrile. The copolymer may contain only one kind or two or more kinds of constituent units (monomer units) derived from these monomers.

The polyvinylidene fluoride copolymer preferably contains 50 mol% or more of constituent units derived from vinylidene fluoride (so-called vinylidene fluoride units) from the viewpoint of obtaining mechanical strength that can withstand pressurization and heating during manufacture of a battery.

The polyvinylidene fluoride copolymer is preferably a copolymer of vinylidene fluoride and tetrafluoroethylene, a copolymer of vinylidene fluoride and hexafluoropropylene, or a copolymer of vinylidene fluoride and trifluoroethylene, and more preferably a copolymer of vinylidene fluoride and hexafluoropropylene. The copolymer of vinylidene fluoride and hexafluoropropylene is preferably a copolymer containing 0.1 mol% to 10 mol% (preferably 0.5 mol% to 5 mol%) of constituent units derived from hexafluoropropylene (so-called hexafluoropropylene units).

A weight-average molecular weight (Mw) of the polyvinylidene fluoride type resin is preferably 1,000 to 5,000,000, more preferably 10,000 to 3,000,000, and still more preferably 50,000 to 2,000,000.

The weight-average molecular weight (Mw) of the polyvinylidene fluoride type resin is a value measured by a gel permeation chromatography (GPC) method. Specifically, using a GPC apparatus "GPC-900" manufactured by JASCO Corporation as a measuring apparatus, using two columns of TSKgel SUPER AWM-H manufactured by Tosoh Corporation, using N,N-dimethylformamide as an eluent, under conditions that a column temperature is 40°C and a flow rate is 0.6 mL/min to obtain a molecular weight in terms of polystyrene.

A melting point of particles of a polyvinylidene fluoride type resin is preferably 110°C to 180°C. When the melting point of particles of a polyvinylidene fluoride type resin is 110°C to 180°C, both adhesiveness and blocking resistance can be achieved. From such a viewpoint, the melting point of particles of a polyvinylidene fluoride type resin is more preferably 120°C or higher, and still more preferably 130°C or higher. On the other hand, from the same viewpoint, the melting point of particles of a polyvinylidene fluoride type resin is more preferably 170°C or lower, and still more preferably 160°C or lower.

The melting point of particles of a polyvinylidene fluoride type resin is determined from a differential scanning calorimetry curve (DSC curve) obtained by differential scanning calorimetry (DSC).

A differential scanning calorimeter is used as a measuring apparatus, and 10 mg of the resin particles are used as a sample. A peak top of an endothermic peak obtained when the sample is heated from 30°C to 200°C at a temperature rising rate of 5°C/min in a nitrogen gas atmosphere, then the temperature is lowered from 200°C to 30°C at a temperature falling rate of 2°C/min, and the temperature is further raised from 30°C to 200°C at a temperature rising rate of 2°C/min is defined as the melting point of the resin particles. A Q20 Differential Scanning Calorimeter manufactured by TA Instruments can be suitably used as the differential scanning calorimeter.

When the adhesive layer contains particles of a polyvinylidene fluoride type resin, a mass ratio of the particles of the polyvinylidene fluoride type resin is preferably 5% by mass to 95% by mass, and more preferably 15% by mass to 85% by mass with respect to the total mass of the adhesive layer.

The adhesive layer may contain a component other than the resin particles described above (so-called another component) as long as the effects of the present disclosure are not impaired, but a ratio of another component in the adhesive layer is preferably 10% by mass or less, and more preferably 5% by mass or less with respect to the total mass of the adhesive layer. A still more preferable aspect is an aspect in which the adhesive layer contains substantially no other component.

Examples of another component include an additive added to an adhesive resin particle dispersion for forming the adhesive layer. Examples of such an additive include a dispersant such as a surfactant, a wetting agent, an antifoaming agent, and a pH adjuster.

The dispersant, the wetting agent, the antifoaming agent, and the pH adjuster are added to the adhesive resin particle dispersion for forming the adhesive layer for the purpose of improving dispersibility, coatability, or storage stability, for the purpose of improving compatibility with the heat-resistant porous layer, for the purpose of suppressing mixing of air into the adhesive resin particle dispersion, and for the purpose of pH adjustment, respectively.

The surfactant is described in paragraphs [0142] and [0143] of WO2019/130994. This description is incorporated herein by reference.

In a certain aspect, the adhesive layer preferably has a peak area S1 of a phenyl group of 0.01 to 3 and a peak area S2 of a carbonyl group of 4 or less by Fourier transform infrared spectroscopy (FT-IR).

When the peak area S1 of a phenyl group is 0.01 or more and the peak area S2 of a carbonyl group is 4 or less, the adhesive layer can exhibit a more sufficient wet adhesive strength to the heat-resistant porous layer and an electrode. When the peak area S1 of a phenyl group is 3 or less, swelling of the adhesive layer in an electrolytic solution can be further suppressed. From such a viewpoint, the peak area S1 of a phenyl group is preferably 0.01 or more, more preferably 0.02 or more, and still more preferably 0.05 or more. The peak area S1 of a phenyl group is preferably 3.0 or less, more preferably 2.5 or less, still more preferably 2.0 or less, and particularly preferably 0.5 or less. The peak area S2 of a carbonyl group is preferably 4 or less, more preferably 3.0 or less, and still more preferably 2.0 or less. The peak area S2 of a carbonyl group may be, for example, 0.01 or more, more preferably 0.051 or more, and still more preferably 0.10 or more.

In another aspect, the adhesive layer preferably has a peak area S1 of a phenyl group by Fourier transform infrared spectroscopy (FT-IR) of 0.01 to 3, a peak area S2 of a carbonyl group by FT-IR of 4 or less, and a peak area S3 of a C-F bond by FT-IR of 0.1 to 8.

When the peak area S3 of a C-F bond by FT-IR is 0.1 to 8, the adhesive layer particularly exhibits sufficient wet adhesive strength to the electrode, and swelling in an electrolytic solution can be suppressed. From such a viewpoint, the peak area S3 of a C-F bond by FT-IR is preferably 0.1 or more, more preferably 0.3 or more, and still more preferably 0.5 or more. On the other hand, the peak area S3 of a C-F bond by FT-IR is preferably 8 or less, more preferably 6.0 or less, still more preferably 4.0 or less, and particularly preferably 2.0 or less.

The peak area S1 of a phenyl group of the adhesive layer by Fourier transform infrared spectroscopy (FT-IR) is determined by the following method. After an absorption spectrum of the adhesive layer is obtained by Fourier transform infrared spectroscopy (FT-IR) under the following conditions, baseline correction is performed on an absorption peak (694 $cm^{-1}$ to 710 $cm^{-1}$) of a phenyl group, and an area (unit: dimensionless) of a range surrounded by a baseline and an absorption spectrum line is determined. Values obtained from absorption spectra in arbitrarily selected eight different ranges are averaged and taken as the peak area S1 of a phenyl group of the adhesive layer.

The peak area S2 of a carbonyl group of the adhesive layer by Fourier transform infrared spectroscopy (FT-IR) is determined by the following method. After an absorption spectrum of the adhesive layer is obtained by Fourier transform infrared spectroscopy (FT-IR) under the following conditions, baseline correction is performed on an absorption peak (1707 $cm^{-1}$ to 1753 $cm^{-1}$) of a carbonyl group, and an area (unit: dimensionless) of a range surrounded by a baseline and an absorption spectrum line is determined. Values obtained from absorption spectra in arbitrarily selected eight different ranges are averaged and taken as the peak area S2 of a carbonyl group of the adhesive layer.

The peak area S3 of a C-F bond by Fourier transform infrared spectroscopy (FT-IR) is determined by the following method. After an absorption spectrum of the adhesive layer is obtained by Fourier transform infrared spectroscopy (FT-IR) under the following conditions, baseline correction is performed on an absorption peak (862 $cm^{-1}$ to 901 $cm^{-1}$) of a C-F bond, and an area (unit: dimensionless) of a range surrounded by a baseline and an absorption spectrum line is determined. Values obtained from absorption spectra in arbitrarily selected eight different ranges are averaged and taken as the peak area S3 of a C-F bond of the adhesive layer.

Each of the areas is calculated by a function of the measuring apparatus.

The absorption peak of a carbonyl group observed in the range of 1707 cm$^{-1}$ to 1753 cm$^{-1}$ is considered to be a carbonyl group derived from (meth)acrylic in the adhesive layer. In addition, the absorption peak of a C-F bond observed in the range of 862 cm$^{-1}$ to 901 cm$^{-1}$ is considered to be a C-F bond derived from vinylidene fluoride in the adhesive layer.

-Conditions-

Measuring apparatus: Fourier transform infrared spectrophotometer [IRAffinity-1, manufactured by Shimadzu Corporation]
Measurement wavelength range: 400 cm$^{-1}$ to 4000 cm$^{-1}$
Measurement mode: transmittance
Apodizing function: Happ-Genzel
Resolution: 4 cm$^{-1}$
Number of integrations: 10 times
Number of measurement samples: n = 8

[Porous Substrate]

The separator of the present disclosure preferably further includes a porous substrate.
When the separator of the present disclosure further includes a porous substrate, the heat-resistant porous layer described above is preferably provided on one side or both sides of the porous substrate.
When the heat-resistant porous layers are provided on both sides of the porous substrate, heat resistance of the separator is better, and safety of a battery can be further improved. In addition, the separator is less likely to be curled, and has excellent handleability during manufacture of a battery. When the heat-resistant porous layer is provided only on one side of the porous substrate, the separator has better ion permeability. In addition, the thickness of the entire separator can be suppressed, and a battery having a higher energy density can be manufactured.
In the present disclosure, "porous substrate" refers to a substrate having pores or voids therein. Examples of such a substrate include a microporous film; and a porous sheet composed of a fibrous material (such as non-woven fabric and paper).
In the present disclosure, a microporous film is preferable as the porous substrate from the viewpoint of thinning and strength of a separator. In the present disclosure, "microporous film" refers to a film having a large number of micropores therein, having a structure in which these micropores are connected to each other, and allowing gas or liquid to pass from one side to the other side.
As the material for the porous substrate, materials having electrical insulation are preferably used and any of organic materials and inorganic materials may be used.
It is preferred that the porous substrate contains a thermoplastic resin, in order to impart a shutdown function to the porous substrate. The "shutdown function" refers to a function of dissolving the constituent material to clog the pores of the porous substrate, thereby blocking ionic migration, and preventing thermal runaway of a battery, when the battery temperature is raised. As the thermoplastic resin, a thermoplastic resin having a melting point lower than 200°C is preferred.
Examples of the thermoplastic resin include polyesters such as polyethylene terephthalate; and polyolefins such as polyethylene and polypropylene.
Among these, polyolefin is preferable as the thermoplastic resin.
As the porous substrate, a microporous film containing polyolefin (referred to as "polyolefin microporous film") is preferred. As the polyolefin microporous film, for example, a polyolefin microporous film which is applied to the conventional separator for a battery may be mentioned, and among them, it is preferred to select those having sufficient mechanical properties and ion permeability.
It is preferred that the polyolefin microporous film is a microporous film containing polyethylene (also referred to as a "polyethylene microporous film"), from the viewpoint of exhibiting the shutdown function. When the polyolefin microporous film contains polyethylene, the content of polyethylene is preferably 95 % by mass or more with respect to the total mass of the polyolefin microporous film.
It is preferred that the polyolefin microporous film is a microporous film containing polypropylene, from the viewpoint of imparting heat resistance to the extent that the film is not easily broken when exposed to a high temperature.
It is preferred that the polyolefin microporous film is a microporous film containing polyethylene and polypropylene, from the viewpoint of imparting shutdown function and heat resistance to the extent that the film is not easily broken when exposed to a high temperature. As the polyolefin microporous film including polyethylene and polypropylene, a microporous film in which polyethylene and polypropylene are present in a mixed state in a layer, and a polyolefin microporous film having a lamination structure with two or more layers, in which at least one layer contains polyethylene and at least one layer contains polypropylene, may be mentioned.

When the polyolefin microporous film is a microporous film containing polyethylene and polypropylene, the content of polyethylene and the content of polypropylene are preferably 95% by mass or more and 5% by mass or less, respectively, with respect to the total mass of the polyolefin microporous film, from the viewpoint of achieving both the shutdown function and the heat resistance in a well-balanced manner.

The weight-average molecular weight (Mw) of the polyolefin contained in the polyolefin microporous film is preferably from 100,000 to 5,000,000.

When the Mw of the polyolefin contained in the polyolefin microporous film is 100,000 or more, sufficient mechanical properties may be provided to the microporous film. On the other hand, when the Mw of the polyolefin contained in the polyolefin microporous film is 5,000,000 or less, the shutdown characteristic of the microporous film is more favorable, and film molding of the microporous film is easy.

The weight-average molecular weight (Mw) of the polyolefin contained in the polyolefin microporous film is a value measured by a gel permeation chromatography (GPC) method. Specifically, the weight-average molecular weight (Mw) is obtained by heating and dissolving a polyolefin microporous film in o-dichlorobenzene to obtain a sample solution, and performing measurement under conditions of a column temperature of 140°C and a flow rate of 1.0 mL/min using a GPC apparatus "HLC-8321GPC/HT type" manufactured by Tosoh Corporation as a measuring apparatus, "TSKgel GMH6-HT" and "TSKgel GMH6-HTL" manufactured by Tosoh Corporation as columns, and o-dichlorobenzene (containing 0.025% by mass 2,6-di-tert-butyl-4-methylphenol) as an eluent. Monodisperse polystyrene (manufactured by Tosoh Corporation) is used for calibration of a molecular weight.

Examples of the method for manufacturing the polyolefin microporous film include, a method including extruding a molten polyolefin from a T-die to form a sheet, crystallizing and stretching the sheet, and further subjecting the sheet to heat treatment, thereby obtaining a microporous film; and a method including extruding a polyolefin melted with a plasticizer such as liquid paraffin from a T-die, cooling it to form a sheet, stretching the sheet, extracting the plasticizer, and performing heat treatment, thereby obtaining a microporous film.

Examples of the porous sheet made of a fibrous material include porous sheets (for example, non-woven fabric, paper, and the like) made of a fibrous material such as polyesters such as polyethylene terephthalate; polyolefins such as polyethylene and polypropylene; heat-resistant resins such as wholly aromatic polyamide, polyamideimide, polyimide, polyethersulfone, polysulfone, polyetherketone, and polyetherimide; and cellulose.

The surface of the porous substrate may be subjected to various surface treatments within the range of not impairing the nature of the porous substrate. When the surface of the porous substrate is subjected to a surface treatment, wettability with the coating liquid for forming the heat-resistant porous layer or the resin particle dispersion for forming the adhesive layer may be improved.

As the surface treatment, corona treatment, plasma treatment, flame treatment, UV irradiation treatment, and the like may be mentioned.

[Characteristics of Porous Substrate]

<<Thickness>>

The thickness of the porous substrate is preferably 10.0 $\mu$m or less, and more preferably 9.0 $\mu$m or less from the viewpoint of increasing the energy density of the battery. On the other hand, the thickness of the porous substrate is preferably 3.0 $\mu$m or more, and more preferably 4.0 $\mu$m or more from the viewpoint of the production yield of the separator and the production yield of the battery.

The thickness of the porous substrate is a value measured with a cylindrical measurement terminal having a diameter of 5 mm using a contact type thickness meter (LITEMATIC, manufactured by Mitutoyo Corporation). Adjustment is performed during the measurement such that a load of 0.01 N is applied, any 20 points within an area of 10 cm $\times$ 10 cm are measured, and an average value thereof is calculated.

<<Gurley Value>>

The Gurley value of the porous substrate is preferably 50 sec/100 mL or more and more preferably 60 sec/100 mL or more, from the viewpoint of obtaining favorable ion permeability. On the other hand, the Gurley value of the porous substrate is preferably 400 sec/100 mL or less and more preferably 200 sec/100 mL or less, from the viewpoint of suppression of battery short circuit.

The Gurley value of the porous substrate is a value measured in accordance with JIS P8117:2009. As the measuring apparatus, for example, Gurley Type Densometer (G-B2C, manufactured by Toyo Seiki Seisaku-sho, Ltd.) can be suitably used.

<<Porosity>>

The porosity of the porous substrate is preferably 20% to 60% from the viewpoint of obtaining appropriate film resistance and shutdown function.

The porosity $\varepsilon$ (%) of the porous substrate is determined by the following formula. Basis weight refers to a mass per unit area.

$$\varepsilon = \{1 - Ws/(ds \cdot t)\} \times 100$$

Here, Ws represents basis weight of porous substrate (g/m$^2$), ds represents true density of porous substrate (g/cm$^3$), and t represents thickness of porous substrate ($\mu$m).

The porosity $\varepsilon$ (%) in the laminated body in which the porous substrate and the heat-resistant porous layer are laminated is determined by the following formula.

$$\varepsilon = \{1 - (Wa/da + Wb/db + Wc/dc + ... + Wn/dn)/t\} \times 100$$

Here, the constituent materials of the porous substrate and the heat-resistant porous layer are a, b, c,..., and n, the mass of each constituent material is Wa, Wb, Wc,..., and Wn (g/cm$^2$), the true density of each constituent material is da, db, dc,..., and dn (g/cm$^3$), and the total thickness of the porous substrate and the heat-resistant porous layer is t ($\mu$m).

<<Puncture Strength>>

The puncture strength of the porous substrate is preferably 200 g or more, and more preferably 250 g or more, from the viewpoint of the production yield of the separator and the production yield of the battery.

The puncture strength of the porous substrate refers to a maximum puncture load (g) measured by performing a puncture test under the conditions of a needle tip radius of curvature of 0.5 mm and a puncture speed of 2 mm/sec using a KES-G5 handy compression tester manufactured by KATO TECH CO., LTD.

[Characteristics of Separator]

<<Thickness>>

The thickness of the separator of the present disclosure is preferably 6.0 $\mu$m or more, and more preferably 7.0 $\mu$m or more from the viewpoint of the mechanical strength of the separator. On the other hand, the thickness of the separator of the present disclosure is preferably 20.0 $\mu$m or less, and more preferably 15.0 $\mu$m or less from the viewpoint of the energy density of the battery.

The thickness of the separator is a value measured with a cylindrical measurement terminal having a diameter of 5 mm using a contact type thickness meter (LITEMATIC, manufactured by Mitutoyo Corporation). Adjustment is performed during the measurement such that a load of 0.01 N is applied, any 20 points within an area of 10 cm $\times$ 10 cm are measured, and an average value thereof is calculated.

<<Puncture Strength>>

The puncture strength of the separator of the present disclosure is preferably from 200 g to 1000 g, and more preferably from 250 g to 600 g from the viewpoint of the mechanical strength of the separator and the short circuit resistance of the battery.

The puncture strength of the separator refers to a maximum puncture load (g) measured by performing a puncture test under the conditions of a needle tip radius of curvature of 0.5 mm and a puncture speed of 2 mm/sec using a KES-G5 handy compression tester manufactured by KATO TECH CO., LTD.

<<Porosity>>

The porosity of the separator of the present disclosure is preferably from 30% to 60% from the viewpoint of the adhesiveness to the electrode, the handleability of the separator, the ion permeability, and the mechanical strength.

The porosity $\varepsilon$ (%) of the separator is determined by the following formula.

$$\varepsilon = \{1 - (Wa/da + Wb/db + Wc/dc + ... + Wn/dn)/t\} \times 100$$

Here, the constituent materials of the separator are a, b, c,..., and n, the mass of each constituent material is Wa, Wb, Wc,..., and Wn (g/cm$^2$), the true density of each constituent material is da, db, dc,..., and dn (g/cm$^3$), and the thickness of the separator is t (cm).

<<Film Resistance (Ion Permeability)>>

The separator of the present disclosure preferably has a film resistance of from 0.5 ohm·cm$^2$ to 10 ohm·cm$^2$, and more preferably from 1 ohm·cm$^2$ to 8 ohm·cm$^2$ from the viewpoint of load characteristics of the battery.

The film resistance of the separator refers to a resistance value in a state where the separator is impregnated with an electrolytic solution, and is measured by an AC method. The measurement is performed at temperature 20°C using 1 mol/L LiBF$_4$-propylene carbonate : ethylene carbonate (mass ratio 1 : 1) as the electrolytic solution.

<<Gurley Value>>

The Gurley value of the separator of the present disclosure is preferably 50 sec/100 mL or more, more preferably 80 sec/100 mL or more, and still more preferably 100 sec/100 mL or more, from the viewpoint of a balance between mechanical strength and ion permeability. From the same viewpoint, the Gurley value is preferably 800 sec/100 mL or less, more preferably 500 sec/100 mL or less, and still more preferably 400 sec/100 mL or less.

The Gurley value of the separator is a value measured in accordance with JIS P8117:2009. As the measuring apparatus, for example, Gurley Type Densometer (G-B2C, manufactured by Toyo Seiki Seisaku-sho, Ltd.) can be suitably used.

In the separator of the present disclosure, from the viewpoint of ion permeability, a value obtained by subtracting the Gurley value of the porous substrate from the Gurley value of the separator (in a state in which the heat-resistant porous layer and the adhesive layer are formed on the porous substrate) is preferably 300 sec/100 mL or less, more preferably 280 sec/100 mL or less, and still more preferably 275 sec/100 mL or less. On the other hand, from the viewpoint that the separator of the present disclosure includes a sufficient amount of adhesive resin particles for adhesion to the electrode, a value obtained by subtracting the Gurley value of the porous substrate from the Gurley value of the separator is preferably 20 sec/100 mL or more, more preferably 50 sec/100 mL or more, and still more preferably 70 sec/100m or more.

<<Thermal Shrinkage Ratio>>

The separator of the present disclosure has a shrinkage ratio, when heat-treated at 130°C for 60 minutes, in an MD direction (also referred to as "thermal shrinkage ratio") of preferably 15% or less, more preferably 12% or less, and still more preferably 9% or less. In addition, the separator of the present disclosure has a thermal shrinkage ratio, when heat-treated at 150°C for 30 minutes of preferably 10% or less, more preferably 8% or less, and still more preferably 7% or less. The thermal shrinkage ratio is preferably more than 0%, and more preferably 1% or more.

The thermal shrinkage ratio of the separator is determined by the following method.

The separator is cut out into a size of 100 mm in the MD direction × 100 mm in the TD direction. Subsequently, a reference line having a length of 70 mm is drawn in the MD direction so as to pass through a center of the cut-out separator to obtain a test piece. The test piece is disposed between two sheets of A4 size paper, and then left standing in an oven at 130°C for 60 minutes or in an oven at 150°C for 30 minutes. The length of the test piece in the MD direction before the heat treatment and the length of the test piece in the MD direction after the heat treatment are measured, and a thermal shrinkage ratio is calculated by the following formula. The above operation is further performed twice, and the thermal shrinkage ratios of the three test pieces are averaged to determine a thermal shrinkage ratio of the separator.

Thermal shrinkage ratio (%) = {(length in MD direction before heat treatment - length in MD direction after heat treatment)/length in MD direction before heat treatment} × 100

[Method of Manufacturing Separator]

The separator of the present disclosure is manufactured, for example, by the following manufacturing method A or manufacturing method B. In the manufacturing method A and the manufacturing method B, the method of forming the heat-resistant porous layer may be a wet coating method or a dry coating method.

The manufacturing method B may be any of the following forms B-1 to B-7. Forms B-1 to B-4 are forms in which the heat-resistant porous layer is formed by the wet coating method. Forms B-5 to B-7 are forms in which the heat-resistant porous layer is formed by the dry coating method.

In the present disclosure, the wet coating method is a method of solidifying a coating layer in a coagulation liquid, and the dry coating method is a method of drying a coating layer to solidify the coating layer.

Manufacturing method A (discontinuous manufacturing method):

A heat-resistant porous layer is formed on a porous substrate unwound from the roll to obtain a laminated body of the porous substrate and the heat-resistant porous layer, and then the laminated body is once wound around another roll. Next, an adhesive layer is formed on the laminated body unwound from the roll to obtain a separator, and the obtained separator is wound around another roll.

Manufacturing method B (continuous manufacturing method):

The heat-resistant porous layer and the adhesive layer are continuously or simultaneously formed on the porous substrate unwound from the roll to obtain a separator, and the obtained separator is wound around another roll.

Form B-1:

A heat-resistant porous layer forming coating liquid is applied onto a porous substrate, the resultant product is immersed in a coagulation liquid to solidify the coating layer and pulled out of the coagulation liquid, and the resultant product is washed with water and dried. Then an adhesive resin particle dispersion is applied onto the resultant product and dried.

Form B-2:

A heat-resistant porous layer forming coating liquid is applied onto a porous substrate, the resultant product is immersed in a coagulation liquid to solidify the coating layer and pulled out of the coagulation liquid, and the resultant product is washed with water. Then an adhesive resin particle dispersion is applied onto the resultant product and dried.

Form B-3:

A heat-resistant porous layer forming coating liquid and an adhesive resin particle dispersion are simultaneously applied in two layers onto a porous substrate. The resultant product is immersed in a coagulation liquid to solidify the former coating layer and pulled out of the coagulation liquid, and the resultant product is washed with water and dried.

Form B-4:

A heat-resistant porous layer forming coating liquid is applied onto a porous substrate, the resultant product is immersed in a coagulation liquid to solidify the coating layer and pulled out of the coagulation liquid. Washing with water and adhesion of an adhesive resin particles are performed by transporting the resultant product in a water bath. The resultant product is pulled out of the water bath and dried.

Form B-5:

A heat-resistant porous layer forming coating liquid is applied onto a porous substrate, and dried. Then an adhesive resin particle dispersion is applied onto the resultant product, and dried.

Form B-6:

A heat-resistant porous layer forming coating liquid is applied onto a porous substrate. Then an adhesive resin particle dispersion is applied onto the resultant product, and dried.

Form B-7:

A heat-resistant porous layer forming coating liquid and an adhesive resin particle dispersion are simultaneously applied in two layers onto a porous substrate, and dried.

Hereinafter, details of the steps included in the manufacturing method will be described using the manufacturing method B of Form B-1 as an example.

In the manufacturing method B of Form B-1, the heat-resistant porous layer is formed on at least one side of the porous substrate by the wet coating method to obtain the laminated body of the porous substrate and the heat-resistant porous layer, and then the adhesive layer is formed on at least one side of the laminated body by the dry coating method. The manufacturing method B of Form B-1 includes the following steps (1) to (7), and the steps (1) to (7) are sequentially performed.

Step (1): Preparation of heat-resistant porous layer forming coating liquid

The heat-resistant porous layer forming coating liquid (hereinafter, the coating liquid is referred to as a "coating liquid" in the description of the manufacturing method.) is prepared by dissolving or dispersing an aromatic type resin and inorganic particles in a solvent. In the coating liquid, other components other than the aromatic type resin and inorganic particles are dissolved or dispersed as necessary.

A solvent used for preparing the coating liquid includes a solvent that dissolves the aromatic type resin (hereinafter, also referred to as a "good solvent"). Examples of the good solvent include a polar amide solvent such as N-methylpyrrolidone, dimethylacetamide, or dimethylformamide.

The solvent used for preparing the coating liquid preferably contains a phase separation agent that induces phase separation from the viewpoint of forming a heat-resistant porous layer having a favorable porous structure. Therefore, the solvent used for preparing the coating liquid is preferably a mixed solvent of a good solvent and a phase separation agent. The phase separation agent is preferably mixed with a good solvent in such an amount that a viscosity suitable for coating can be ensured. Examples of the phase separation agent include water, methanol, ethanol, propyl alcohol, butyl alcohol, butanediol, ethylene glycol, propylene glycol, and tripropylene glycol.

The solvent used for preparing the coating liquid is preferably a mixed solvent of a good solvent and a phase separation agent, containing 60% by mass or more of the good solvent and from 5% by mass to 40% by mass of the phase separation agent from the viewpoint of forming a heat-resistant porous layer having a favorable porous structure.

The aromatic type resin concentration of the coating liquid is preferably from 1% by mass to 20% by mass from the viewpoint of forming a heat-resistant porous layer having a favorable porous structure.

The inorganic particles concentration of the coating liquid is preferably from 2% by mass to 50% by mass from the viewpoint of forming a heat-resistant porous layer having a favorable porous structure.

Step (2): Preparation of adhesive resin particle dispersion

The adhesive resin particle dispersion is prepared by dispersing the adhesive resin particles in water. In order to enhance the dispersibility of the adhesive resin particles in water, a surfactant may be added to the adhesive resin particle dispersion. The adhesive resin particle dispersion may be a commercially available product or a diluent of a commercially available product.

The concentration of the adhesive resin particles in the adhesive resin particle dispersion is preferably from 1% by mass to 60% by mass from the viewpoint of the coating suitability.

Step (3): Applying of coating liquid

The coating liquid is applied to at least one side of the porous substrate to form the coating layer on the porous substrate. Examples of the method of applying the coating liquid to the porous substrate include a knife coating method, a Meyer bar coating method, a die coating method, a reverse roll coating method, a roll coating method, a gravure coating method, a screen printing method, an inkjet method, and a spray method. When the heat-resistant porous layer is formed on both sides of the porous substrate, it is preferable to simultaneously apply the coating liquid to both sides of the porous substrate from the viewpoint of productivity.

Step (4): Solidification of coating layer

The porous substrate on which the coating layer is formed is immersed in the coagulation liquid to solidify the aromatic type resin while inducing phase separation in the coating layer, thereby forming the heat-resistant porous layer. Thus, the laminated body including the porous substrate and the heat-resistant porous layer is obtained.

The coagulation liquid generally contains the good solvent and the phase separation agent used for preparing the coating liquid, and water. A mixing ratio between the good solvent and the phase separation agent is preferably matched with the mixing ratio of the mixed solvent used for preparing the coating liquid in terms of production. The content of water in the coagulation liquid is preferably from 40% by mass to 90% by mass from viewpoints of formation of a porous structure and productivity. The temperature of the coagulation liquid is, for example, from 20°C to 50°C.

Step (5): Washing and drying of coating layer

The laminated body is pulled up from the coagulation liquid and washed with water. The coagulation liquid is removed from the laminated body by washing with water. Further, water is removed from the laminated body by drying. The water washing is performed, for example, by conveying the laminated body in a water washing bath. The drying is performed, for example, by conveying the laminated body in the high-temperature environment, applying air to the laminated body, bringing the laminated body into contact with a heat roll, or the like. The drying temperature is preferably from 40°C to 80°C.

Step (6): Applying of adhesive resin particle dispersion

The adhesive resin particle dispersion is applied to at least one side of the laminated body. Examples of the method of applying the adhesive resin particle dispersion include a knife coating method, a gravure coating method, a Meyer bar coating method, a die coating method, a reverse roll coating method, a roll coating method, a screen printing method, an inkjet method, and a spray method.

Step (7): Drying of adhesive resin particle dispersion

The adhesive resin particle dispersion on the laminated body is dried to adhere the adhesive resin particles to the surface of the laminated body. The drying is performed, for example, by conveying the laminated body in the high-temperature environment, applying air to the laminated body, or the like. The drying temperature is preferably from 40°C to 100°C.

The manufacturing method A for manufacturing a separator or the manufacturing method B of Form B-2 to Form B-7 can be performed by partially omitting or changing the above steps (1) to (7).

[Non-Aqueous Secondary Battery]

The non-aqueous secondary battery of the present disclosure is a non-aqueous secondary battery that obtains electromotive force by lithium doping and dedoping, and includes a positive electrode, a negative electrode, and the separator for a non-aqueous secondary battery of the present disclosure, the separator being disposed between the positive electrode and the negative electrode.

The "doping" means occlusion, support, adsorption, or insertion, and means a phenomenon that lithium ions enter an active material of an electrode such as a positive electrode.

The non-aqueous secondary battery of the present disclosure is a non-aqueous secondary battery including a positive electrode, a negative electrode, and a separator disposed between the positive electrode and the negative electrode, in which the separator includes a heat-resistant porous layer containing an aromatic type resin and inorganic particles, and an adhesive layer which is provided on the heat-resistant porous layer and in which adhesive resin particles containing a phenyl group-containing acrylic type resin are adhered to the heat-resistant porous layer, the separator is bonded to the positive electrode or the negative electrode with the adhesive layer interposed therebetween, and when the separator and the electrode are peeled off from each other, the adhesive resin particles adhere to both the heat-resistant porous layer and the electrode.

The term "separator" as used herein has the same meaning as the separator for a non-aqueous secondary battery of the present disclosure, and a preferred aspect thereof is also similar.

The non-aqueous secondary battery of the present disclosure has a structure in which, for example, a battery element in which a negative electrode and a positive electrode face each other with a separator interposed therebetween is enclosed in an exterior material together with an electrolytic solution. The non-aqueous secondary battery of the present disclosure is suitable for a non-aqueous electrolyte secondary battery, particularly for a lithium ion secondary battery.

The non-aqueous secondary battery of the present disclosure is excellent in battery productivity and battery cycle characteristics (capacity retention rate) because the separator of the present disclosure is excellent in the adhesion to the electrode either in the case of dry heat press or wet heat press.

Hereinafter, aspect examples of the positive electrode, negative electrode, electrolytic solution, and exterior material included in the non-aqueous secondary battery according to the present disclosure will be described.

Examples of an embodiment of the positive electrode include a structure in which an active material layer containing a positive electrode active material and a binder resin is formed on a current collector. The active material layer may further contain a conductive auxiliary agent.

Examples of the positive electrode active material include a lithium-containing transition metal oxide, and specific examples thereof include a compound such as $LiCoO_2$, $LiNiO_2$, $LiMn_{1/2}Ni_{1/2}O_2$, $LiCo_{1/3}Mn_{1/3}Ni_{1/3}O_2$, $LiMn_2O_4$, $LiFePO_4$, $LiCo_{1/2}Ni_{1/2}O_2$, and $LiAl_{1/4}Ni_{3/4}O_2$.

Examples of the binder resin include a resin such as a polyvinylidene fluoride type resin, and a styrene-butadiene copolymer.

Examples of the conductive auxiliary agent include carbon materials such as acetylene black, Ketjen black, and graphite powder.

Examples of the current collector include a metal foil such as an aluminum foil, a titanium foil, and a stainless steel foil, each having a thickness of from 5 μm to 20 μm.

Examples of an embodiment of the negative electrode include a structure in which an active material layer containing a negative electrode active material and a binder resin is formed on a current collector. The active material layer may further contain a conductive auxiliary agent.

Examples of the negative electrode active material include materials capable of electrochemically occluding lithium. Specific examples thereof include carbon materials; and alloys of lithium in combination with silicon, tin, aluminum, or the like; and wood's alloy.

Examples of the binder resin include a resin such as a polyvinylidene fluoride type resin, and a styrene-butadiene copolymer.

Examples of the conductive auxiliary agent include carbon materials such as acetylene black, Ketjen black, and graphite powder.

Examples of the current collector include a metal foil such as a copper foil, a nickel foil, and a stainless steel foil, each having a thickness of from 5 μm to 20 μm. Instead of using the negative electrode described above, a metal lithium foil may be used as the negative electrode.

The electrolytic solution is, for example, a solution in which a lithium salt is dissolved in a non-aqueous solvent.

Examples of the lithium salt include a compound such as $LiPF_6$, $LiBF_4$, and $LiClO_4$. The lithium salt may be used singly or in combination of two or more kinds thereof.

Examples of the non-aqueous solvent include a solvent, for example, cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as γ-butyrolactone and γ-valerolactone. The non-aqueous solvent may be used singly, or in combination of two or more kinds thereof.

As the electrolytic solution, a solution is preferred, which is obtained by mixing a cyclic carbonate and a chain carbonate at a mass ratio (cyclic carbonate : chain carbonate) of from 20 : 80 to 40 : 60, and dissolving a lithium salt therein to give a concentration of from 0.5 mol/L to 1.5 mol/L.

Examples of the exterior material include a metal can and an aluminum laminated film pack.

The shape of the battery may be, for example, a shape of a square shape, a cylindrical shape, a coin shape, and the like, but the separator of the present disclosure is suitable for any one of these shapes.

[Method for Manufacturing Non-Aqueous Secondary Battery]

Examples of the method for manufacturing a non-aqueous secondary battery according to the present disclosure include a first manufacturing method including: a lamination step of manufacturing a laminated body in which the separator of the present disclosure is disposed between a positive electrode and a negative electrode; a dry bonding step of dry heat-pressing the laminated body to bond at least one of the positive electrode and the negative electrode to the separator; and a sealing step of sealing the laminated body that has been subjected to the dry bonding step inside an exterior material together with an electrolytic solution.

In addition, examples of the method for manufacturing a non-aqueous secondary battery according to the present disclosure include a second manufacturing method including: a lamination step of manufacturing a laminated body in which the separator of the present disclosure is disposed between a positive electrode and a negative electrode; a sealing step of sealing the laminated body inside an exterior material together with an electrolytic solution; and a wet bonding step of wet heat-pressing the laminated body that has been subjected to the sealing step from the outside of the exterior material to bond at least one of the positive electrode and the negative electrode to the separator.

(First Manufacturing Method)

The lamination step is a step of manufacturing a laminated body in which the separator of the present disclosure is disposed between a positive electrode and a negative electrode. The lamination step may be, for example, a step of disposing the separator of the present disclosure between a positive electrode and a negative electrode and winding the obtained product in a length direction to manufacture a wound body (so-called wound type laminated body), or a step of laminating at least one positive electrode, at least one separator, and at least one negative electrode in this order to manufacture a laminated body.

The dry bonding step is a step of dry heat-pressing the laminated body to bond at least one of the positive electrode and the negative electrode to the separator.

The dry bonding step may be performed before the laminated body is housed in an exterior material (for example, an aluminum laminated film pack), or may be performed after the laminated body is housed in the exterior material. That is, the laminated body in which the electrode and the separator are bonded to each other by dry heat press may be housed in the exterior material, or after the laminated body is housed in the exterior material, dry heat press may be performed from the outside of the exterior material to bond the electrode to the separator.

Press temperature in the dry bonding step is preferably 50°C to 120°C, more preferably 60°C to 110°C, and still more preferably 70°C to 100°C.

When the press temperature in the dry bonding step is within the above range, bonding between the electrode and the separator is moderately favorable, and the separator can be moderately expanded in a width direction. Therefore, short circuit of a battery tends to hardly occur. In addition, since the electrode and the separator are moderately bonded to each other, impregnation with an electrolytic solution tends to be hardly inhibited.

Press pressure in the dry bonding step is preferably 0.1 MPa to 10 MPa, and more preferably 0.5 MPa to 5 MPa.

Press time in the dry bonding step is preferably adjusted according to press temperature and press pressure, and is adjusted, for example, in a range of 0.1 minutes to 60 minutes.

After the lamination step and before the dry bonding step, the laminated body may be pressed at room temperature (pressurized at room temperature) to perform temporal bonding of the laminated body.

The sealing step is a step of sealing the laminated body that has been subjected to the dry bonding step inside an exterior material together with an electrolytic solution.

In the sealing step, for example, an electrolytic solution is injected into an exterior material in which the laminated body is housed, and then an opening of the exterior material is sealed. The opening of the exterior material is sealed by, for example, bonding the opening of the exterior material with an adhesive or heating and pressurizing the opening of the exterior material to thermally press-bond the opening. The inside of the exterior body is preferably brought into a vacuum state before the opening of the exterior material is sealed.

In the sealing step, it is preferable that a heat press treatment is performed on the laminated body from the outside of the exterior material at the same time as heating and pressurizing the opening of the exterior material to thermally press-bond the opening. By performing a heat press treatment (so-called wet heat press) in a state where the laminated body and the electrolytic solution coexist, bonding between the electrode and the separator is further strengthened.

Press temperature of the wet heat press performed in the sealing step is preferably 60°C to 110°C, press pressure is preferably 0.5 MPa to 5 MPa, and press time is preferably adjusted according to the press temperature and the press pressure, for example, adjusted in a range of 0.5 minutes to 60 minutes.

(Second Manufacturing Method)

The lamination step is a step of manufacturing a laminated body in which the separator of the present disclosure is disposed between a positive electrode and a negative electrode. Similarly to the lamination step in the first manufacturing method, the lamination step may be, for example, a step of disposing the separator of the present disclosure between a positive electrode and a negative electrode and winding the obtained product in a length direction to manufacture a wound body (so-called wound type laminated body), or a step of laminating at least one positive electrode, at least one separator, and at least one negative electrode in this order to manufacture a laminated body.

The sealing step is a step of sealing the laminated body inside an exterior material together with an electrolytic solution.

In the sealing step, for example, an electrolytic solution is injected into an exterior material (for example, an aluminum laminated film pack) in which the laminated body is housed, and then an opening of the exterior material is sealed. The opening of the exterior material is sealed by, for example, bonding the opening of the exterior material with an adhesive or heating and pressurizing the opening of the exterior material to thermally press-bond the opening. The inside of the exterior body is preferably brought into a vacuum state before the opening of the exterior material is sealed.

The wet bonding step is a step of heat-pressing the laminated body that has been subjected to the sealing step, that is, the laminated body housed in the exterior material together with the electrolytic solution to a heat press treatment from the outside of the exterior material (so-called wet heat press) to bond at least one of the positive electrode and the negative electrode to the separator.

Press temperature in the wet bonding step is preferably 60°C to 110°C, more preferably 70°C to 100°C, and still more preferably 70°C to 90°C.

When the press temperature in the wet bonding step is within the above range, decomposition of the electrolytic solution can be suppressed, bonding between the electrode and the separator is favorable, and the separator can be moderately expanded in a width direction. Therefore, short circuit of a battery tends to hardly occur.

Press pressure in the wet bonding step is preferably 0.1 MPa to 5 MPa, and more preferably 0.5 MPa to 3 MPa.

Press time in the wet bonding step is preferably adjusted according to press temperature and press pressure, and is adjusted, for example, in a range of 0.1 minutes to 60 minutes.

EXAMPLES

Hereinafter, the separator and the non-aqueous secondary battery of the present disclosure will be described more specifically with reference to Examples. Materials, used amounts, ratios, treatment procedures, and the like illustrated in the following Examples can be changed, if appropriate without departing from the spirit of the present disclosure. Therefore, the range of the separator and the non-aqueous secondary battery of the present disclosure should not be construed as being limited by the specific examples described below.

[Measurement Method and Evaluation Method]

The measurement methods and evaluation methods applied in Examples and Comparative Examples are as follows.

[Thicknesses of Porous Substrate, Separator, and Heat-Resistant Porous Layer]

The thicknesses ($\mu$m) of the porous substrate, the separator, and the heat-resistant porous layer were measured with a contact type thickness meter (LITEMATIC VL-50, manufactured by Mitutoyo Corporation).
As a measuring terminal, a cylindrical terminal having a diameter of 5 mm was used, and adjustment was performed such that a load of 0.01 N was applied during the measurement. The thicknesses of arbitrary 20 points within an area of 10 cm $\times$ 10 cm were measured, and an average value thereof was determined.

[Basis Weight]

A basis weight (mass per m$^2$, g/m$^2$) was obtained by cutting out a sample into 10 cm $\times$ 30 cm, measuring the mass, and dividing the mass by the area.

[Mass per Unit Area of Heat-Resistant Porous Layer]

The mass (g/m$^2$) per unit area of the heat-resistant porous layer was determined by subtracting a basis weight (g/m$^2$) before formation of the layer from a basis weight (g/m$^2$) after formation of the layer.

[Adhesion Amount of Adhesive Resin Particles to Heat-Resistant Porous Layer]

An adhesion amount (g/m$^2$) of the adhesive resin particles contained in the adhesive layer to the heat-resistant porous layer was determined by subtracting a basis weight (g/m$^2$) before formation of the layer from a basis weight (g/m$^2$) after formation of the layer.

[Gurley Value]

The Gurley value (sec/100 mL) of each of the porous substrate and the separator was measured in accordance with JIS P8117:2009. A Gurley Type Densometer (G-B2C, manufactured by Toyo Seiki Seisaku-sho, Ltd.) was used as a measuring apparatus.

[Porosity (Porous Substrate, Porous Substrate + Heat-Resistant Porous Layer)]

The porosity $\varepsilon$ (%) of the porous substrate and the laminated body of the porous substrate and the heat-resistant hard layer was determined by the following formula.

$$\varepsilon = \{1 - (Wa/da + Wb/db + Wc/dc + ... + Wn/dn)/t\} \times 100$$

Here, the constituent materials of the porous substrate and the heat-resistant porous layer are a, b, c,..., and n, the mass of each constituent material is Wa, Wb, Wc,..., and Wn (g/cm$^2$), the true density of each constituent material is da, db, dc,..., and dn (g/cm$^3$), and the total thickness of the porous substrate and the heat-resistant porous layer is t ($\mu$m).

[Glass Transition Temperature of Resin Particles Contained in Adhesive Layer]

Glass transition temperature of the resin particles contained in the adhesive layer was determined from a differential scanning calorimetry curve (DSC curve) obtained by differential scanning calorimetry (DSC). A differential scanning calorimeter [Q20 Differential Scanning Calorimeter, manufactured by TA Instruments] was used as a measuring apparatus, and 10 mg of the resin particles were used as a sample. A temperature at a point where a straight line obtained by extending a baseline on a low temperature side to a high temperature side intersects with a tangent line which is a tangent line of a curve of a stepwise change portion and has a maximum gradient was defined as the glass transition temperature of the resin particles.

[Melting Point of Resin Particles Contained in Adhesive Layer]

A melting point of the resin particles contained in the adhesive layer was determined from a differential scanning calorimetry curve (DSC curve) obtained by differential scanning calorimetry (DSC). A differential scanning calorimeter [Q20 Differential Scanning Calorimeter, manufactured by TA Instruments] was used as a measuring apparatus, and 10 mg of the resin particles were used as a sample. A peak top of an endothermic peak obtained when the sample was heated from 30°C to 200°C at a temperature rising rate of 5°C/min in a nitrogen gas atmosphere, then the temperature was lowered from 200°C to 30°C at a temperature falling rate of 2°C/min, and the temperature was further raised from 30°C to 200°C at a temperature rising rate of 2°C/min was defined as the melting point of the resin particles.

[Average Primary Particle Diameter of Inorganic Particles Contained in Heat-Resistant Porous Layer]

The average primary particle diameter of the inorganic particles contained in the heat-resistant porous layer was determined by measuring the major diameters of 100 inorganic particles randomly selected by observation with a scanning electron microscope (SEM), and averaging the major diameters of 100 inorganic particles. The sample subjected to SEM observation was inorganic particles which were a material for forming the heat-resistant porous layer. The method for taking out the inorganic particles from the heat-resistant porous layer of the separator is not limited.

[Volume Average Particle Diameter of Resin Particles Contained in Adhesive Layer]

The resin particles were dispersed in water containing Triton (registered trademark) X-100 [compound name: polyethylene glycol tert-octylphenyl ether, manufactured by The Dow Chemical Company] as a nonionic surfactant, and a particle size distribution was measured using a laser diffraction particle size distribution measuring apparatus [Mastersizer 2000, manufactured by SYSMEX CORPORATION]. In a volume-based particle size distribution, a particle diameter (D50) at a cumulative volume of 50% from a smaller diameter side was taken as the volume average particle diameter ($\mu$m) of the resin particles.

[Peak Area S1 of Phenyl Group of Adhesive Layer by Fourier Transform Infrared Spectroscopy]

After an absorption spectrum of the adhesive layer was obtained by Fourier transform infrared spectroscopy (FT-IR) under the following conditions, baseline correction was performed on an absorption peak (694 $cm^{-1}$ to 710 $cm^{-1}$) of a phenyl group, and an area (unit: dimensionless) of a range surrounded by a baseline and an absorption spectrum line was determined. Values obtained from absorption spectra of arbitrarily selected eight different ranges were averaged and taken as the peak area S1 of a phenyl group of the adhesive layer. Conditions for FT-IR are described below.

-Conditions-

Measuring apparatus: Fourier transform infrared spectrophotometer [IRAffinity-1, manufactured by Shimadzu Corporation]
Measurement wavelength range: 400 $cm^{-1}$ to 4000 $cm^{-1}$
Measurement mode: transmittance
Apodizing function: Happ-Genzel
Resolution: 4 $cm^{-1}$
Number of integrations: 10 times
Number of measurement samples: n = 8

[Peak Area S2 of Carbonyl Group]

After an absorption spectrum of the adhesive layer was obtained by Fourier transform infrared spectroscopy (FT-IR) under the following conditions, baseline correction was performed on an absorption peak (1707 cm$^{-1}$ to 1753 cm$^{-1}$) of a carbonyl group, and an area (unit: dimensionless) of a range surrounded by a baseline and an absorption spectrum line was determined. Values obtained from absorption spectra of arbitrarily selected eight different ranges were averaged and taken as the peak area S2 of a carbonyl group of the adhesive layer. Conditions for FT-IR are similar to those for the peak area S1.

[Peak Area S3 of C-F Bond]

After an absorption spectrum of the adhesive layer was obtained by Fourier transform infrared spectroscopy (FT-IR) under the following conditions, baseline correction was performed on an absorption peak (862 cm$^{-1}$ to 901 cm$^{-1}$) of a C-F bond, and an area (unit: dimensionless) of a range surrounded by a baseline and an absorption spectrum line was determined. Values obtained from absorption spectra in arbitrarily selected eight different ranges were averaged and taken as the peak area S3 of a C-F bond of the adhesive layer. Conditions for FT-IR are similar to those for the peak area S1.

[Degree of Swelling of Resin Particles Contained in Adhesive Layer]

An aqueous dispersion of the resin particles was poured onto a glass plate with a metal frame having an inner size of 50 mm $\times$ 70 mm, and dried at 150°C for one hour to prepare a sheet-shaped measurement sample. The prepared measurement sample was cut out for about 1 g, and the weight W1 (g) thereof was accurately measured with an electronic balance. Thereafter, the measurement sample was immersed in an electrolytic solution [1 mol/L LiBF$_4$ ethylene carbonate : ethyl methyl carbonate (volume ratio 3 : 7)] at 60°C for 24 hours. The measurement sample after immersion was taken out from the electrolytic solution, the electrolytic solution adhering to a surface was wiped off. Thereafter, the weight W2 (g) thereof was measured with an electronic balance, and the degree of swelling (%) of the resin particles was determined by the following formula.

$$\text{Degree of swelling (\%)} = (W2/W1) \times 100$$

[Thermal Shrinkage Ratio of Separator]

The separator was cut out into a size of 100 mm in the MD direction $\times$ 100 mm in the TD direction. Subsequently, a reference line having a length of 70 mm was drawn in the MD direction so as to pass through a center of the cut-out separator to obtain a test piece. The test piece was disposed between two sheets of A4 size paper, and then left standing in an oven at 130°C for 60 minutes or in an oven at 150°C for 30 minutes. The length of the test piece in the MD direction before the heat treatment and the length of the test piece in the MD direction after the heat treatment were measured, and a thermal shrinkage ratio was calculated by the following formula. The above operation was further performed twice, and the thermal shrinkage ratios of the three test pieces were averaged to determine a thermal shrinkage ratio of the separator.

Thermal shrinkage ratio (%) = {(length in MD direction before heat treatment - length in MD direction after heat treatment)/length in MD direction before heat treatment} $\times$ 100

[Adhesive Strength Between Electrode and Separator: Dry Heat Press]

97 g of lithium cobaltate powder as a positive electrode active material, 1.5 g of acetylene black as a conductive auxiliary agent, 1.5 g of polyvinylidene fluoride as a binder, and an appropriate amount of N-methylpyrrolidone were mixed under stirring with a double-armed mixer to prepare a positive electrode slurry. This positive electrode slurry was applied to one side of an aluminum foil having a thickness of 20 $\mu$m, dried and then pressed to obtain a positive electrode having a positive electrode active material layer (one-side coating).
The positive electrode obtained above was cut out into a size of 15 mm in width and 70 mm in length. The separator was cut out into a size of 18 mm in the TD direction and 75 mm in the MD direction. An aluminum foil having a thickness of 20 $\mu$m was cut out into a size of 15 mm in width and 70 mm in length. The positive electrode, the separator, and the aluminum foil were stacked in this order to prepare a laminated body, and the laminated body was housed in an aluminum laminate pack as an exterior material. Subsequently, the inside of the pack was brought into a vacuum state using a vacuum sealer, and then the pack was sealed. Subsequently, the laminated body was heat-pressed (temperature: 85°C, load: 1 MPa, press time: 30 seconds) together with the pack using a heat press machine to bond the positive electrode and the separator in the pack to each other. Thereafter, the pack was opened, the laminated body was taken out, and the aluminum foil was removed from the laminated body to obtain a test piece.

The separator of the test piece was fixed to a lower chuck of Tensilon (STB-1225S, manufactured by A&D Company, Limited). At this time, the separator was fixed to Tensilon such that the length direction of the test piece (that is, the MD direction of the separator) was the direction of gravity. The positive electrode was peeled off from the separator by about 2 cm from a lower end. The end was fixed to an upper chuck, and a 180° peel test was performed. A tensile speed in the 180° peel test was 100 mm/min. A load (N) from 10 mm to 40 mm after start of the measurement was sampled at 0.4 mm intervals. An average thereof was calculated. Furthermore, the loads of the three test pieces were averaged to obtain an adhesive strength between the electrode and the separator (N/15 mm) at the time of dry heat press. In Table 3 and Table 4, the adhesive strength between the electrode and the separator at the time of dry heat press was described as "dry adhesive strength between electrode and separator".

[Adhesive Strength Between Electrode and Separator: Wet Heat Press]

97 g of lithium cobaltate powder as a positive electrode active material, 1.5 g of acetylene black as a conductive auxiliary agent, 1.5 g of polyvinylidene fluoride as a binder, and an appropriate amount of N-methylpyrrolidone were mixed under stirring with a double-armed mixer to prepare a positive electrode slurry. This positive electrode slurry was applied to one side of an aluminum foil having a thickness of 20 μm, dried and then pressed to obtain a positive electrode having a positive electrode active material layer (one-side coating).

The positive electrode obtained above was cut out into a size of 15 mm in width and 70 mm in length. The separator was cut out into a size of 18 mm in the TD direction and 75 mm in the MD direction. An aluminum foil having a thickness of 20 μm was cut out into a size of 15 mm in width and 70 mm in length. The positive electrode, the separator, and the aluminum foil were stacked in this order to prepare a laminated body, and this laminated body was housed in an aluminum laminate pack as an exterior material. Thereafter, an electrolytic solution (1 mol/L of $LiBF_4$-ethylene carbonate : diethyl carbonate : propylene carbonate [mass ratio 1 : 1 : 1]) was injected thereinto, and vacuum defoaming was repeated five times. Subsequently, an excess electrolytic solution was removed, and the pack was sealed. Thereafter, the pack was left to stand for 24 hours. Subsequently, the laminated body was heat-pressed (temperature: 85°C, load: 1 MPa, press time: 15 seconds) together with the pack using a heat press machine to bond the positive electrode and the separator in the pack to each other. Thereafter, the pack was opened, the laminated body was taken out, and the aluminum foil was removed from the laminated body to obtain a test piece.

The separator of the test piece was fixed to a lower chuck of Tensilon (STB-1225S, manufactured by A&D Company, Limited). At this time, the separator was fixed to Tensilon such that the length direction of the test piece (that is, the MD direction of the separator) was the direction of gravity. The positive electrode was peeled off from the separator by about 2 cm from a lower end. The end was fixed to an upper chuck, and a 180° peel test was performed. A tensile speed in the 180° peel test was 100 mm/min. A load (N) from 10 mm to 40 mm after start of the measurement was sampled at 0.4 mm intervals. An average thereof was calculated. Furthermore, the loads of the three test pieces were averaged to obtain an adhesive strength between the electrode and the separator (N/15 mm) at the time of wet heat press. In Table 3 and Table 4, the adhesive strength between the electrode and the separator at the time of wet heat press is described as "wet adhesive strength between electrode and separator".

[Compression Breaking Strength]

(Preparation of Negative Electrode)

300 g of artificial graphite as a negative electrode active material, 7.5 g of a watersoluble dispersion containing 40% by mass of a modified substance of a styrene-butadiene copolymer as a binder, 3 g of carboxymethyl cellulose as a thickener, and an appropriate amount of water were stirred with a double-armed mixer to prepare a negative electrode slurry. This negative electrode slurry was applied to a copper foil having a thickness of 10 μm, which was a negative electrode current collector, and the obtained coating film was dried and pressed to prepare a negative electrode having a negative electrode active material layer.

(Preparation of Positive Electrode)

89.5 g of lithium cobaltate powder as a positive electrode active material, 4.5 g of acetylene black as a conductive auxiliary agent, 6 g of polyvinylidene fluoride as a binder, and an appropriate amount of N-methylpyrrolidone were stirred with a double-armed mixer to prepare a positive electrode slurry. This positive electrode slurry was applied to an aluminum foil having a thickness of 20 μm, which was a positive electrode current collector, and the obtained coating film was dried and pressed to prepare a positive electrode having a positive electrode active material layer.

(Production of Battery)

Lead tabs were welded to the positive electrode and the negative electrode prepared as described above, the separators prepared in Examples and Comparative Examples were interposed between the positive electrode and the negative electrode, and these were joined, impregnated with an electrolytic solution, and sealed in an aluminum pack using a vacuum sealer. Here, 1M LiPF$_6$ ethylene carbonate/ethyl methyl carbonate (3/7 mass ratio) was used as the electrolytic solution.

(Heat Press Treatment)

The non-aqueous secondary battery produced as described above was subjected to a heat press treatment to bond the electrode and the separator. The pressing conditions at this time were set to 90°C, 1 MPa, and 2 min.

[Compression Breaking Strength Measurement]

The produced non-aqueous secondary battery which had been subjected to a heat press treatment as described above was charged. The charging condition was CCCV. The battery was charged at 0.1 c to 4.2 c and then held at 4.2 V for 3 hours. This secondary battery was used as a battery cell for compression breaking strength measurement. This battery cell was fixed on a table with a tape such that the positive electrode side faced upward, a spherical terminal having a diameter of 5 mm was lowered toward the secondary battery from above at a constant rate of 100 mm/min, and the value of the load applied to the terminal at the moment when the voltage of the battery cell decreased to 3.5 V was taken as the compression breaking strength.

[Preparation of Separator]

(Example 1)

Meta-type aramid [polymetaphenylene isophthalamide, Teijinconex (registered trademark) manufactured by TEIJIN LIMITED); aromatic type resin] and barium sulfate particles (average primary particle diameter: 0.05 μm; inorganic particles) were mixed under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass to obtain a heat-resistant porous layer forming coating liquid.
An adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 μm] and polyvinylidene fluoride (PVDF) type resin particles [melting point: 140°C., volume average particle diameter: 0.25 μm] were dispersed in water at a mixing mass ratio of 50 : 50 was prepared.
An appropriate amount of the heat-resistant porous layer forming coating liquid was placed on a pair of Meyer bars. A polyethylene microporous film (thickness: 8 μm, porosity: 33%, Gurley value: 160 sec/100 mL) as a porous substrate was caused to pass between the Meyer bars, and the heat-resistant porous layer forming coating liquid was applied to both sides of the polyethylene microporous film in equal amounts. The resulting film was immersed in a coagulation liquid (DMAc : TPG : water = 30 : 8 : 62 [mass ratio], liquid temperature: 25°C) to solidify the coating layers, subsequently washed in a water washing tank at a water temperature of 25°C, and dried. Subsequently, the resulting film was caused to pass between a pair of bar coaters on which an appropriate amount of the adhesive layer forming resin particle dispersion was placed, and the adhesive layer forming resin particle dispersion was applied to both sides of the film in equal amounts, and dried. In this way, a separator (structure: adhesive layer/heat-resistant porous layer/porous substrate/heat-resistant porous layer/adhesive layer) in which heat-resistant porous layers [mass per unit area: 6.0 g/m$^2$ (total on both sides), thickness: 4.0 μm (total on both sides)] and adhesive layers [mass per unit area: 0.5 g/m$^2$ (total on both sides)] were formed on both sides of the polyethylene microporous film was obtained.

(Example 2)

A separator was prepared in a similar manner to Example 1 except that the adhesive layer forming resin particle dispersion was changed to an adhesive layer forming resin particle dispersion (solid content concentration: 7% by mass) in which adhesive resin particles (B) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 89 : 11, glass transition temperature 50°C, volume average

27

particle diameter 0.5 $\mu$m] and polyvinylidene fluoride (PVDF) type resin particles [melting point: 140°C., volume average particle diameter: 0.25 $\mu$m] were dispersed in water at a mixing mass ratio of 50 : 50.

(Example 3)

A separator was prepared in a similar manner to Example 1 except that the adhesive layer forming resin particle dispersion was changed to an adhesive layer forming resin particle dispersion (solid content concentration: 7% by mass) in which adhesive resin particles (C) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 18 : 82, glass transition temperature 54°C, volume average particle diameter 0.5 $\mu$m] and polyvinylidene fluoride (PVDF) type resin particles [melting point: 140°C., volume average particle diameter: 0.25 $\mu$m] were dispersed in water at a mixing mass ratio of 50 : 50.

(Example 4)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] were dispersed in water.

(Example 5)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] and polyvinylidene fluoride (PVDF) type resin particles [melting point: 140°C., volume average particle diameter: 0.25 $\mu$m] were dispersed in water at a mixing mass ratio of 90 : 10.

(Example 6)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] and polyvinylidene fluoride (PVDF) type resin particles [melting point: 140°C., volume average particle diameter: 0.25 $\mu$m] were dispersed in water at a mixing mass ratio of 70 : 30.

(Example 7)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] and polyvinylidene fluoride (PVDF) type resin particles [melting point: 140°C., volume average particle diameter: 0.25 $\mu$m] were dispersed in water at a mixing mass ratio of 30 : 70.

(Example 8)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] and polyvinylidene fluoride (PVDF) type resin particles [melting point: 140°C., volume average particle diameter: 0.25 $\mu$m] were dispersed in water at a mixing mass ratio of 10 : 90.

(Example 9)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Teijinconex (registered trademark) manufactured by TEIJIN LIMITED); aromatic type resin] and barium sulfate particles (average primary particle diameter: 0.01 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

(Example 10)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Teijinconex (registered trademark) manufactured by TEIJIN LIMITED); aromatic type resin] and barium sulfate particles (average primary particle diameter: 0.3 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

(Example 11)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Teijinconex (registered trademark) manufactured by TEIJIN LIMITED); aromatic type resin] and barium sulfate particles (average primary particle diameter: 0.45 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

(Example 12)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Teijinconex (registered trademark) manufactured by TEIJIN LIMITED); aromatic type resin] and magnesium hydroxide particles (average primary particle diameter: 0.3 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

(Example 13)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Teijinconex (registered trademark) manufactured by TEIJIN LIMITED); aromatic type resin] and aluminum oxide particles (average primary particle diameter: 0.01 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

(Example 14)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Teijinconex (registered trademark) manufactured by TEIJIN LIMITED); aromatic type resin] and aluminum oxide particles (average primary particle diameter: 0.3 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

(Example 15)

A separator was prepared in a same manner to Example 1 except that the heat-resistant porous layer formed on both sides of the polyethylene microporous film was changed to 2.0 μm in thickness (total on both sides) in a mass per unit area of 3.0 g/m$^2$ (total on both sides).

(Example 16)

A separator was prepared in a same manner to Example 1 except that the heat-resistant porous layer formed on both sides of the polyethylene microporous film was changed to 1.5 μm in thickness (total on both sides) in a mass per unit area of 2.4 g/m$^2$ (total on both sides).

(Example 17)

A separator was prepared in a similar manner to Example 1 except that the heat-resistant porous layer forming coating liquid was changed to a heat-resistant porous layer forming coating liquid obtained by mixing a polyamideimide [Torlon (registered trademark) 4000TF, manufactured by Solvay; aromatic type resin] and barium sulfate particles (average primary particle diameter: 0.05 μm; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the polyamideimide was 8% by mass.

(Example 18)

A separator was prepared in a similar manner to Example 1 except that the heat-resistant porous layer forming coating liquid was changed to a heat-resistant porous layer forming coating liquid obtained by mixing a polyimide [Q-VR-X1444, manufactured by PI R&D Co., Ltd.; aromatic type resin] and barium sulfate particles (average primary particle diameter: 0.05 μm; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the polyimide was 6% by mass.

(Example 19)

A separator was prepared in a same manner to Example 1 except that the adhesive layer formed on both sides of the polyethylene microporous film was changed such that a mass per unit area was 1.0 g/m$^2$ (total on both sides).

(Example 20)

A separator was prepared in a same manner to Example 1 except that the adhesive layer formed on both sides of the polyethylene microporous film was changed such that a mass per unit area was 0.3 g/m$^2$ (total on both sides).

(Comparative Example 1)

A separator was prepared in a similar manner to Example 1 except that the adhesive layer forming resin particle dispersion was changed to an adhesive layer forming resin particle dispersion (solid content concentration: 7% by mass) in which phenyl group-not containing acrylic type resin particles (glass transition temperature: 56°C, volume average particle diameter: 0.5 μm) were dispersed in water.

(Comparative Example 2)

A separator was prepared in a similar manner to Example 1 except that the adhesive layer forming resin particle dispersion was changed to an adhesive layer forming resin particle dispersion (solid content concentration: 7% by mass) in which polyvinylidene fluoride (PVDF) type resin particles (melting point: 140°C, volume average particle diameter: 0.25 μm) were dispersed in water.

(Comparative Example 3)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Teijinconex (registered trademark) manufactured by TEIJIN LIMITED); aromatic type resin] and barium sulfate particles (average primary particle diameter: 0.7 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

(Comparative Example 4)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Teijinconex (registered trademark) manufactured by TEIJIN LIMITED); aromatic type resin] and magnesium hydroxide particles (average primary particle diameter: 0.8 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

[Table 1]

| | | Adhesive layer | | | | | | | | Heat-resistant porous layer | | | |
|---|---|---|---|---|---|---|---|---|---|---|---|---|---|
| | | Resin particles | | | | | | | Mixing mass ratio (Particles 1/Particles 2) | Adhesion amount of resin particles to heat-resistant porous layer (Total on both sides) [g/m$^2$] | Binder resin | Inorganic particles | | Thickness (Total on both sides) [µm] | Mass per unit area (Total on both sides) [g/m$^2$] |
| | | Particles 1 | | | | Particles 2 | | | | | | | | | |
| | | Type | S1 | S2 | Volume average particle diameter [µm] | Type | S3 | Volume average particle diameter [µm] | | | | Type | Average primary particle diameter [µm] | | |
| Example 1 | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | BaSO$_4$ | 0.05 | 4.0 | 6.0 |
| Example 2 | Adhesive resin particles (B) containing phenyl group-containing acrylic type resin | 0.15 | 0.14 | 0.5 | PVDF type resin particles | 0.5 | 0.25 | 50/50 | 0.5 | Meta-type aramid | BaSO$_4$ | 0.05 | 4.0 | 6.0 |

32

EP 4 518 001 A1

| | Adhesive layer | | | | | | | | | Heat-resistant porous layer | | | | |
| | Resin particles | | | | | | | Mixing mass ratio (Particles 1/Particles 2) | Adhesion amount of resin particles to heat-resistant porous layer (Total on both sides) [g/m$^2$] | Binder resin | Inorganic particles | | Thickness (Total on both sides) [μm] | Mass per unit area (Total on both sides) [g/m$^2$] |
| | Particles 1 | | | | Particles 2 | | | | | | | | | |
| | Type | S1 | S2 | Volume average particle diameter [μm] | Type | S3 | Volume average particle diameter [μm] | | | | Type | Average primary particle diameter [μm] | | |
|---|---|---|---|---|---|---|---|---|---|---|---|---|---|---|
| Example 3 | Adhesive resin particles (C) containing phenyl group-containing acrylic type resin | 0.03 | 0.71 | 0.5 | PVDF type resin particles | 0.5 | 0.25 | 50/50 | 0.5 | Meta-type aramid | BaSO$_4$ | 0.05 | 4.0 | 6.0 |
| Example 4 | Adhesive resin particles (A) containing phenyl group-containing acrylic type resin | 0.15 | 0.69 | 0.5 | - | - | - | 100/0 | 0.5 | Meta-type aramid | BaSO$_4$ | 0.05 | 4.0 | 6.0 |

EP 4 518 001 A1

33

| | | Adhesive layer | | | | | | | | | Heat-resistant porous layer | | | |
| | | Resin particles | | | | | | Mixing mass ratio (Particles 1/Particles 2) | Adhesion amount of resin particles to heat-resistant porous layer (Total on both sides) [g/m²] | Binder resin | Inorganic particles | | Thickness (Total on both sides) [μm] | Mass per unit area (Total on both sides) [g/m²] |
| | | Particles 1 | | | | Particles 2 | | | | | | | | |
| | Type | S1 | S2 | Volume average particle diameter [μm] | Type | S3 | Volume average particle diameter [μm] | | | | Type | Average primary particle diameter [μm] | | |
| Example 5 | Adhesive resin particles (A) containing phenyl group-containing acrylic type resin | 0.14 | 0.63 | 0.5 | PVDF type resin particles | 0.1 | 0.25 | 90/10 | 0.5 | Meta-type aramid | $BaSO_4$ | 0.05 | 4.0 | 6.0 |
| Example 6 | Adhesive resin particles (A) containing phenyl group-containing acrylic type resin | 0.11 | 0.49 | 0.5 | PVDF type resin particles | 0.3 | 0.25 | 70/30 | 0.5 | Meta-type aramid | $BaSO_4$ | 0.05 | 4.0 | 6.0 |

34

EP 4 518 001 A1

(continued)

| | Adhesive layer | | | | | | | | Heat-resistant porous layer | | | | |
| | Resin particles | | | | | | Mixing mass ratio (Particles 1/Particles 2) | Adhesion amount of resin particles to heat-resistant porous layer (Total on both sides) [g/m²] | Binder resin | Inorganic particles | | Thickness (Total on both sides) [μm] | Mass per unit area (Total on both sides) [g/m²] |
| | Type | Particles 1 | | | Particles 2 | | | | | Type | Average primary particle diameter [μm] | | |
| | | S1 | S2 | Volume average particle diameter [μm] | Type | S3 | Volume average particle diameter [μm] | | | | | | | |
| Example 7 | Adhesive resin particles (A) containing phenyl group-containing acrylic type resin | 0.05 | 0.21 | 0.5 | PVDF type resin particles | 0.7 | 0.25 | 30/70 | 0.5 | Meta-type aramid | BaSO$_4$ | 0.05 | 4.0 | 6.0 |
| Example 8 | Adhesive resin particles (A) containing phenyl group-containing acrylic type resin | 0.02 | 0.07 | 0.5 | PVDF type resin particles | 0.9 | 0.25 | 10/90 | 0.5 | Meta-type aramid | BaSO$_4$ | 0.05 | 4.0 | 6.0 |

| | Adhesive layer | | | | | | | | Heat-resistant porous layer | | | |
| | Resin particles | | | | | | Mixing mass ratio (Particles 1/Particles 2) | Adhesion amount of resin particles to heat-resistant porous layer (Total on both sides) [g/m²] | Binder resin | Inorganic particles | | Thickness (Total on both sides) [μm] | Mass per unit area (Total on both sides) [g/m²] |
| | Particles 1 | | | | Particles 2 | | | | | | | | |
| | Type | S1 | S2 | Volume average particle diameter [μm] | Type | S3 | Volume average particle diameter [μm] | | | | Type | Average primary particle diameter [μm] | | |
| Example 9 | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | $BaSO_4$ | 0.01 | 4.0 | 6.3 |
| Example 10 | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | $BaSO_4$ | 0.3 | 4.0 | 5.8 |

EP 4 518 001 A1

36

| | Adhesive layer | | | | | | | | | Heat-resistant porous layer | | | |
| | Resin particles | | | | | | Mixing mass ratio (Particles 1/Particles 2) | Adhesion amount of resin particles to heat-resistant porous layer (Total on both sides) [g/m²] | Binder resin | Inorganic particles | | Thickness (Total on both sides) [μm] | Mass per unit area (Total on both sides) [g/m²] |
| | Particles 1 | | | | Particles 2 | | | | | | | | |
| | Type | S1 | S2 | Volume average particle diameter [μm] | Type | S3 | Volume average particle diameter [μm] | | | | Type | Average primary particle diameter [μm] | | |
| Example 11 | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | $BaSO_4$ | 0.45 | 4.0 | 5.5 |
| Example 12 | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | $Mg(OH)_2$ | 0.3 | 4.0 | 3.8 |

EP 4 518 001 A1

[Table 2]

| | | Adhesive layer | | | | | | | | | Heat-resistant porous layer | | | |
|---|---|---|---|---|---|---|---|---|---|---|---|---|---|---|
| | | Resin particles | | | | | | | Mixing mass ratio (Particles 1/Particles 2) | Adhesion amount of resin particles to heat-resistant porous layer (Total on both sides) [g/m$^2$] | Binder resin | Inorganic particles | | Thickness (Total on both sides) [μm] | Mass per unit area (Total on both sides) [g/m$^2$] |
| | | Particles 1 | | | | Particles 2 | | | | | | | | | |
| | | Type | S1 | S2 | Volume average particle diameter [μm] | Type | S3 | Volume average particle diameter [μm] | | | | Type | Average primary particle diameter [μm] | | |
| Example 13 | | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | Al$_2$O$_3$ | 0.01 | 4.0 | 5.5 |
| Example 14 | | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | Al$_2$O$_3$ | 0.3 | 4.0 | 5.0 |

EP 4 518 001 A1

38

(continued)

| | Adhesive layer | | | | | | | | | Heat-resistant porous layer | | | | |
| | Resin particles | | | | | | | Mixing mass ratio (Particles 1/Particles 2) | Adhesion amount of resin particles to heat-resistant porous layer (Total on both sides) [g/m²] | Binder resin | Inorganic particles | | Thickness (Total on both sides) [μm] | Mass per unit area (Total on both sides) [g/m²] |
| | Particles 1 | | | | Particles 2 | | | | | | | | | |
| | Type | S1 | S2 | Volume average particle diameter [μm] | S3 | Type | Volume average particle diameter [μm] | | | | Type | Average primary particle diameter [μm] | | |
| Example 15 | Adhesive resin particles (A) containing phenyl group-containing acrylic type resin | 0.08 | 0.35 | 0.5 | 0.5 | PVDF type resin particles | 0.25 | 50/50 | 0.5 | Meta-type aramid | BaSO₄ | 0.05 | 2.0 | 3.0 |
| Example 16 | Adhesive resin particles (A) containing phenyl group-containing acrylic type resin | 0.08 | 0.35 | 0.5 | 0.5 | PVDF type resin particles | 0.25 | 50/50 | 0.5 | Meta-type aramid | BaSO₄ | 0.05 | 1.5 | 2.4 |

(continued)

| | | Adhesive layer | | | | | | | | | Heat-resistant porous layer | | | | |
| | | Resin particles | | | | | | | Mixing mass ratio (Particles 1/Particles 2) | Adhesion amount of resin particles to heat-resistant porous layer (Total on both sides) [g/m$^2$] | Binder resin | Inorganic particles | | Thickness (Total on both sides) [μm] | Mass per unit area (Total on both sides) [g/m$^2$] |
| | | Particles 1 | | | | Particles 2 | | | | | | | | | |
| | Type | Type | S1 | S2 | Volume average particle diameter [μm] | Type | S3 | Volume average particle diameter [μm] | | | | Type | Average primary particle diameter [μm] | | |
| Example 17 | Adhesive resin particles (A) containing phenyl group-containing acrylic type resin | | 0.08 | 0.35 | 0.5 | PVDF type resin particles | 0.5 | 0.25 | 50/50 | 0.5 | Meta-type aramid | BaSO$_4$ | 0.05 | 4.0 | 6.0 |
| Example 18 | Adhesive resin particles (A) containing phenyl group-containing acrylic type resin | | 0.08 | 0.35 | 0.5 | PVDF type resin particles | 0.5 | 0.25 | 50/50 | 0.5 | Polyimide | BaSO$_4$ | 0.05 | 4.0 | 6.0 |

| | | Adhesive layer | | | | | | | | | Heat-resistant porous layer | | | |
| | | Resin particles | | | | | | Mixing mass ratio (Particles 1/Particles 2) | Adhesion amount of resin particles to heat-resistant porous layer (Total on both sides) [g/m²] | Binder resin | Inorganic particles | | Thickness (Total on both sides) [μm] | Mass per unit area (Total on both sides) [g/m²] |
| | | Particles 1 | | | Particles 2 | | | | | | | | | |
| | Type | S1 | S2 | Volume average particle diameter [μm] | Type | S3 | Volume average particle diameter [μm] | | | | Type | Average primary particle diameter [μm] | | |
| Example 19 | Adhesive resin particles (A) containing phenyl group-containing acrylic type resin | 0.16 | 0.69 | 0.5 | PVDF type resin particles | 1.0 | 0.25 | 50/50 | 1.0 | Meta-type aramid | BaSO$_4$ | 0.05 | 4.0 | 6.0 |
| Example 20 | Adhesive resin particles (A) containing phenyl group-containing acrylic type resin | 0.05 | 0.21 | 0.5 | PVDF type resin particles | 0.3 | 0.25 | 50/50 | 0.3 | Meta-type aramid | BaSO$_4$ | 0.05 | 4.0 | 6.0 |

| | Adhesive layer | | | | | | | | Heat-resistant porous layer | | | | |
| --- | --- | --- | --- | --- | --- | --- | --- | --- | --- | --- | --- | --- | --- |
| | Resin particles | | | | | | | Mixing mass ratio (Particles 1/Particles 2) | Adhesion amount of resin particles to heat-resistant porous layer (Total on both sides) [g/m²] | Binder resin | Inorganic particles | | Thickness (Total on both sides) [μm] | Mass per unit area (Total on both sides) [g/m²] |
| | Particles 1 | | | | Particles 2 | | | | | | | | | |
| | Type | S1 | S2 | Volume average particle diameter [μm] | Type | S3 | Volume average particle diameter [μm] | | | | Type | Average primary particle diameter [μm] | | |
| Comparative Example 1 | Phenyl group-not containing acrylic type resin particles | 0 | 1.85 | 0.5 | - | - | - | - | 0.5 | Meta-type aramid | BaSO₄ | 0.05 | 4.0 | 6.0 |
| Comparative Example 2 | - | - | - | - | PVDF type resin particles | 1.0 | 0.25 | 0/100 | 0.5 | Meta-type aramid | BaSO₄ | 0.05 | 4.0 | 6.0 |
| Comparative Example 3 | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | BaSO₄ | 0.7 | 4.0 | 5.0 |

EP 4 518 001 A1

(continued)

| | Adhesive layer | | | | | | | | Heat-resistant porous layer | | | | |
| | Resin particles | | | | | | | Adhesion amount of resin particles to heat-resistant porous layer (Total on both sides) [g/m²] | Binder resin | Inorganic particles | | Thickness (Total on both sides) [μm] | Mass per unit area (Total on both sides) [g/m²] |
| | Particles 1 | | | | Particles 2 | | | Mixing mass ratio (Particles 1/Particles 2) | | | | Type | Average primary particle diameter [μm] | | |
| | Type | S1 | S2 | Volume average particle diameter [μm] | Type | S3 | Volume average particle diameter [μm] | | | | | | | |
| Comparative Example 4 | Adhesive resin particles (A) containing phenyl group-containing acrylic type resin | 0.08 | 0.35 | 0.5 | PVDF type resin particles | 0.5 | 0.25 | 50/50 | 0.5 | Meta-type aramid | Mg(OH)$_2$ | 0.8 | 4.0 | 3.0 |

[Table 3]

| | Porosity (Porous substrate + Heat-resistant porous layer)[%] | Gurley value of separator [sec/100 mL] | Thermal shrinkage ratio of separator at 130°C [%] | Thermal shrinkage ratio of separator at 150°C [%] | Degree of swelling of resin particles contained in adhesive layer [%] | Wet adhesive strength between electrode and separator [N/15 mm] | Dry adhesive strength between electrode and separator [N/15 mm] | Compression breaking strength [N] |
|---|---|---|---|---|---|---|---|---|
| Example 1 | 43 | 253 | 2 | 2 | 220 | 0.09 | 0.07 | 562 |
| Example 2 | 43 | 250 | 2 | 2 | 160 | 0.11 | 0.07 | 550 |
| Example 3 | 43 | 254 | 2 | 2 | 270 | 0.04 | 0.05 | 568 |
| Example 4 | 43 | 248 | 2 | 2 | 330 | 0.11 | 0.07 | 549 |
| Example 5 | 43 | 250 | 2 | 2 | 290 | 0.11 | 0.07 | 551 |
| Example 6 | 43 | 252 | 2 | 2 | 250 | 0.10 | 0.07 | 554 |
| Example 7 | 43 | 253 | 2 | 2 | 180 | 0.06 | 0.04 | 564 |
| Example 8 | 43 | 252 | 2 | 2 | 140 | 0.05 | 0.04 | 567 |
| Example 9 | 42 | 256 | 2 | 2 | 220 | 0.08 | 0.06 | 580 |
| Example 10 | 44 | 250 | 2 | 4 | 220 | 0.09 | 0.07 | 552 |
| Example 11 | 44 | 245 | 4 | 6 | 220 | 0.09 | 0.08 | 549 |
| Example 12 | 43 | 247 | 2 | 4 | 220 | 0.08 | 0.05 | 550 |

[Table 4]

| | Porosity (Porous substrate + Heat-resistant porous layer)[%] | Gurley value of separator [sec/100 mL] | Thermal shrinkage ratio of separator at 130°C [%] | Thermal shrinkage ratio of separator at 150°C [%] | Degree of swelling of resin particles contained in adhesive layer [%] | Wet adhesive strength between electrode and separator [N/15 mm] | Dry adhesive strength between electrode and separator [N/15 mm] | Compression breaking strength [N] |
|---|---|---|---|---|---|---|---|---|
| Example 13 | 43 | 248 | 2 | 3 | 220 | 0.07 | 0.05 | 568 |
| Example 14 | 44 | 245 | 2 | 4 | 220 | 0.07 | 0.05 | 550 |
| Example 15 | 41 | 236 | 2 | 2 | 220 | 0.09 | 0.07 | 519 |
| Example 16 | 39 | 230 | 3 | 3 | 220 | 0.08 | 0.06 | 510 |
| Example 17 | 43 | 283 | 3 | 3 | 220 | 0.08 | 0.06 | 548 |
| Example 18 | 43 | 288 | 3 | 3 | 220 | 0.09 | 0.06 | 554 |

(continued)

|  | Porosity (Porous substrate + Heat-resistant porous layer)[%] | Gurley value of separator [sec/100 mL] | Thermal shrinkage ratio of separator at 130°C [%] | Thermal shrinkage ratio of separator at 150°C [%] | Degree of swelling of resin particles contained in adhesive layer [%] | Wet adhesive strength between electrode and separator [N/15 mm] | Dry adhesive strength between electrode and separator [N/15 mm] | Compression breaking strength [N] |
|---|---|---|---|---|---|---|---|---|
| Example 19 | 43 | 256 | 2 | 2 | 220 | 0.15 | 0.08 | 556 |
| Example 20 | 43 | 250 | 2 | 2 | 220 | 0.06 | 0.04 | 563 |
| Comparative Example 1 | 43 | 248 | 2 | 2 | 460 | 0.02 | 0.07 | 562 |
| Comparative Example 2 | 43 | 253 | 2 | 2 | 120 | 0.01 | 0.04 | 563 |
| Comparative Example 3 | 45 | 245 | 7 | 13 | 220 | 0.08 | 0.07 | 510 |
| Comparative Example 4 | 46 | 240 | 7 | 14 | 220 | 0.09 | 0.06 | 509 |

As presented in Table 3 and Table 4, the separators of Examples were excellent in adhesiveness to the electrode by any of dry heat press and wet heat press. In addition, the separators of Examples had a low thermal shrinkage ratio and excellent heat resistance.

The disclosure of Japanese Patent Application No. 2022-075458 filed on April 28, 2022 is incorporated herein by reference in its entirety.

All documents, patent applications, and technical standards described in this description are incorporated herein by reference to the same extent as if each of the documents, the patent applications, and the technical standards were specifically and individually indicated to be incorporated herein by reference.

## Claims

1. A separator for a non-aqueous secondary battery, the separator comprising:

    a heat-resistant porous layer that contains an aromatic type resin and inorganic particles, and
    an adhesive layer that is provided on the heat-resistant porous layer, and that contains adhesive resin particles having a phenyl group-containing acrylic type resin,
    wherein the adhesive resin particles having a phenyl group-containing acrylic type resin are adhered to the heat-resistant porous layer, and
    wherein an average primary particle diameter of the inorganic particles is from 0.01 $\mu$m to less than 0.50 $\mu$m.

2. The separator for a non-aqueous secondary battery according to claim 1, wherein the adhesive resin particles having a phenyl group-containing acrylic type resin are at least one selected from the group consisting of: (i) resin particles of a copolymer containing an acrylic type monomer unit and a styrene type monomer unit, and (ii) resin particles of a mixture containing an acrylic type resin and a styrene type resin.

3. The separator for a non-aqueous secondary battery according to claim 1, wherein an adhesion amount of the adhesive resin particles having a phenyl group-containing acrylic type resin to the heat-resistant porous layer is from 0.1 g/m$^2$ to 5.0 g/m$^2$.

4. The separator for a non-aqueous secondary battery according to claim 1, wherein the adhesive layer has a peak area S1 of a phenyl group of from 0.01 to 3 and a peak area S2 of a carbonyl group of 4 or less, measured by Fourier transform infrared spectroscopy.

5. The separator for a non-aqueous secondary battery according to claim 1, wherein the aromatic type resin contains at least one selected from the group consisting of wholly aromatic polyamide, polyamideimide, and polyimide.

6. The separator for a non-aqueous secondary battery according to claim 1, wherein the inorganic particles contain at least one selected from the group consisting of a metal hydroxide, a metal sulfate, and a metal oxide.

7. The separator for a non-aqueous secondary battery according to claim 1, wherein the separator further comprises a porous substrate, and the heat-resistant porous layer is provided on one side or on both sides of the porous substrate.

8. A non-aqueous secondary battery that obtains electromotive force by lithium doping and dedoping, the non-aqueous secondary battery comprising: a positive electrode; a negative electrode; and the separator for a non-aqueous secondary battery according to any one of claims 1 to 7, the separator being disposed between the positive electrode and the negative electrode.

## INTERNATIONAL SEARCH REPORT

International application No.

**PCT/JP2023/016768**

### A. CLASSIFICATION OF SUBJECT MATTER

*H01M 50/451*(2021.01)i; *B32B 5/18*(2006.01)i; *B32B 27/30*(2006.01)i; *H01M 50/42*(2021.01)i; *H01M 50/423*(2021.01)i; *H01M 50/434*(2021.01)i; *H01M 50/443*(2021.01)i; *H01M 50/446*(2021.01)i; *H01M 50/457*(2021.01)i; *H01M 50/489*(2021.01)i

FI:  H01M50/451; B32B5/18; B32B27/30 A; H01M50/42; H01M50/423; H01M50/434; H01M50/443 B; H01M50/443 E; H01M50/443 M; H01M50/446; H01M50/457; H01M50/489

According to International Patent Classification (IPC) or to both national classification and IPC

### B. FIELDS SEARCHED

Minimum documentation searched (classification system followed by classification symbols)

H01M50/451; B32B5/18; B32B27/30; H01M50/42; H01M50/423; H01M50/434; H01M50/443; H01M50/446; H01M50/457; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2014/050708 A1 (ZEON CORP.) 03 April 2014 (2014-04-03) | 1-8 |
| A | WO 2020/246497 A1 (TEIJIN LTD.) 10 December 2020 (2020-12-10) | 1-8 |
| A | WO 2019/130994 A1 (TEIJIN LTD.) 04 July 2019 (2019-07-04) | 1-8 |

☐ Further documents are listed in the continuation of Box C.　　☑ See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **12 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
**Information on patent family members**

International application No.

**PCT/JP2023/016768**

| Patent document cited in search report | | | Publication date (day/month/year) | Patent family member(s) | | | Publication date (day/month/year) |
|---|---|---|---|---|---|---|---|
| WO | 2014/050708 | A1 | 03 April 2014 | US | 2015/0270523 | A1 | |
| | | | | EP | 2903055 | A1 | |
| | | | | CN | 104662707 | A | |
| | | | | KR | 10-2015-0064040 | A | |
| WO | 2020/246497 | A1 | 10 December 2020 | US | 2022/0200098 | A1 | |
| | | | | EP | 3919269 | A1 | |
| | | | | KR | 10-2021-0136100 | A | |
| | | | | CN | 113678312 | A | |
| WO | 2019/130994 | A1 | 04 July 2019 | US | 2021/0057703 | A1 | |
| | | | | EP | 3734698 | A1 | |
| | | | | CN | 111492504 | A | |
| | | | | KR | 10-2020-0102437 | A | |

Form PCT/ISA/210 (patent family annex) (January 2015)

**EP 4 518 001 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019130994 A
- WO 2020246497 A
- JP 2022075458 A